# EUROPEAN PATENT APPLICATION

(11) **EP 4 397 695 A1**
(43) Date of publication of application: **10.07.2024**
(21) Application number: 22864329.2
(22) Date of filing: 23.08.2022
(51) Int. Cl.: C08G 77/50, C08K 5/5425, C08L 83/14, C09D 183/14, C09J 183/14, C09K 3/10

(54) **ORGANOPOLYSILOXANE COMPOUND, ROOM TEMPERATURE-CURABLE ORGANOPOLYSILOXANE COMPOSITION, AND ARTICLE**

(30) Priority: 03.09.2021 JP 2021143977
(71) Applicant: SHIN-ETSU CHEMICAL CO., LTD., Tokyo 1000005 (JP)
(72) Inventor: UTA, Akira, Annaka-shi, Gunma 379-0224 (JP); SAKAMOTO, Takafumi, Annaka-shi, Gunma 379-0224 (JP)
(74) Representative: Mewburn Ellis LLP
(86) International application number: PCT/JP2022/031647
(87) International publication number: WO 2023/032745

(57) **Abstract**

Provided are: a novel organopolysiloxane compound represented by general formula (1); 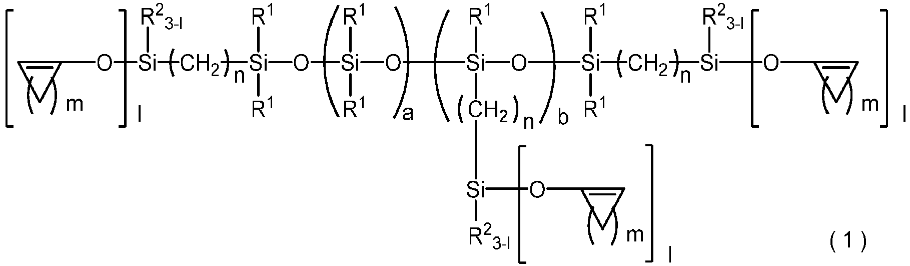 a room temperature-curable organopolysiloxane composition which contains said compound and a hydrolyzable organosilane compound having a cycloalkenyloxysilyl group and/or a partially hydrolyzed condensate thereof, has curing properties equivalent to those of conventional products even when various catalysts are used, reduces harmfulness to the human body and environmental load, and has favorable rubber physical properties, moisture resistance, and LLC resistance after curing; and various articles having said composition or a cured product of said composition.

## Description

### TECHNICAL FIELD

The present invention relates to a novel organopolysiloxane compound in which a hydrolyzable silyl group having a specific structure is bonded to a molecular chain end thereof via a silalkylene bond; a condensation-curable room temperature curable organopolysiloxane composition that comprises the compound as base polymer and is crosslinked (cured) through a hydrolysis/condensation reaction by humidity (moisture) in the air at room temperature (23°C ± 15°C), particularly a room temperature curable organopolysiloxane composition in which a leaving compound generated from a base polymer and a crosslinking agent through a hydrolysis reaction during curing is a cyclic ketone compound such as cyclopentanone, and which adequately cures through a condensation curing reaction and gives a silicone rubber cured product (elastomeric organopolysiloxane cured product) excellent in adhesive property; and various articles including the composition or a cured product thereof (silicone rubber).

### BACKGROUND ART

Room temperature curable organopolysiloxane compositions that are cured at room temperature to form silicone rubber have been heretofore known and widely used in industry. As mechanisms of being cured at room temperature, a mechanism of being cured through a hydrosilylation addition reaction, a mechanism of being radically cured by ultraviolet rays, a mechanism of being cured through a condensation reaction between a hydrolyzable group bonded to a silicon atom and a hydroxyl group, and the like are known. In particular, a room temperature curable organopolysiloxane composition which is cured through a condensation reaction has an advantage that it can be easily cured at room temperature, and is unlikely to undergo inhibition of curing by impurities which occurs in a hydrosilylation addition reaction or the like. Therefore, the room temperature curable organopolysiloxane composition is widely used in the fields of in-vehicle gaskets and sealing materials, sealants for building, electrical or electronic parts, and the like. Recently, for meeting electrification in various industries, cured products of room temperature curable organopolysiloxane compositions to be used as sealing materials and adhesive agents are required to have characteristics such as moisture resistance during heating and long life coolant resistance (LLC resistance).

A room temperature curable organopolysiloxane composition that is cured through a condensation reaction contains a hydrolyzable organosilane compound having a hydrolyzable group as a curing agent (crosslinking agent), and as curing agents that have widely used, a deoximation-type hydrolyzable organosilane compound that releases an oxime compound such as 2-butanone oxime during curing, a dealcoholization-type hydrolyzable organosilane compound that releases an alcohol compound such as methanol, and the like are known. A rubbery cured product obtained by curing a room temperature curable organopolysiloxane composition containing a curing agents has high heat resistance, chemical resistance and weather resistance originating from silicone (siloxane structure).

On the other hand, the deoximation-type curing agent is not preferable because an oxime compound such as 2-butanone oxime which is generated by the curing agent during curing may be carcinogenic, and the dealcoholization-type curing agent is not preferable from the viewpoint of the health of the human body because methanol generated by the curing agent during curing is toxic to the human body and is designated as a deleterious substance. Further, these room temperature curable organopolysiloxane compositions, in which a tin catalyst strictly regulated as an environmentally hazardous substance may be used as a curing catalyst, are not preferable from the viewpoint of protecting the environment.

Further, the curing agent (crosslinking agent) used for the dealcoholization-type room temperature curable organopolysiloxane composition has lower reactivity as compared to the curing agent used in the deoximation-type room temperature curable organopolysiloxane composition, and therefore the dealcoholization-type has a disadvantage of being inferior in curability to the deoximation type.

From the viewpoint of environmental protection and suppression of health damage, products that are more environmentally friendly and safer while having higher performance are particularly desired, and there is an increasing demand for a room temperature curable organopolysiloxane composition in which a leaving compound has high safety and excellent performance is exhibited.

JP-A 2018-515634 (Patent Document 1) discloses a condensation curable organopolysiloxane composition which desorbs and releases an α-hydroxycarboxylic acid ester compound typified by ethyl lactate and contains a silane compound as a crosslinking agent, as a replacement for dealcoholization-type and deoximation-type curing agents. In this system, ethyl lactate as a leaving group is a compound having high safety, but the use of a tin catalyst as a catalyst is essential. A tin catalyst has been pointed out to be harmful to aquatic organisms, and the use of a tin catalyst is not preferable from the viewpoint of environmental protection.

JP-B S51-39673 (Patent Document 2) discloses a condensation curable organopolysiloxane composition that releases a ketone-based compound typified by acetone. Acetone is a compound less harmful to the human body as compared with 2-butanone oxime and methanol, and provides a composition that gives a silicone rubber cured product that is cured more quickly and has better durability over conventional cured forms. However, there is a problem that acetone has high volatility with its burning point being as low as -20°C, and therefore is used in limited environments.

JP-B 5997778 (Patent Document 3) discloses a dealcoholization-type room temperature curable organopolysiloxane composition in which an organosilicon compound having an alkoxysilyl-ethylene bond at an end is used as a base polymer to improve curability and moisture resistance. However, the room temperature curable organopolysiloxane compositions, in which leaving gas during curing is methanol that is a deleterious substance, is not preferable from the viewpoint of protecting the human body and the environment.

### PRIOR ART DOCUMENTS

### PATENT DOCUMENTS

Patent Document 1: JP-A 2018-515634
Patent Document 2: JP-B S51-39673
Patent Document 3: JP-B 5997778

### SUMMARY OF INVENTION

### TECHNICAL PROBLEM

The present invention has been made in view of the above-described circumstances, and an object of the present invention is to provide a novel organopolysiloxane compound suitable as a base polymer of a room temperature curable organopolysiloxane composition, in which an end (and a side chain) is blocked with a specific hydrolyzable silyl group (cycloalkenyloxysilyl group) whose leaving group (leaving compound) is a cyclic ketone compound such as cyclopentanone which has not been reported to have health harmfulness to the human body such as carcinogenicity and reproduction toxicity and environmental harmfulness such as toxicity to aquatic organisms and has a relatively high burning point; a room temperature curable organopolysiloxane composition which by containing the compound as a base polymer and simultaneously containing a hydrolyzable organosilane compound and/or a partial hydrolytic condensate thereof having a specific hydrolyzable group (cycloalkenyloxy group) whose leaving group (leaving compound) is a cyclic ketone compound such as cyclopentanone as a crosslinking agent, has the same curability as conventional products regardless of which catalyst is used, reduces harmfulness to the human body and environmental hazardous, and exhibits good rubber physical properties, moisture resistance and LLC resistance after curing; and various articles including the composition or a cured product (silicone rubber) obtained by curing the composition.

### SOLUTION TO PROBLEM

The present inventors have intensively conducted studies for achieving the above-described objects, and resultantly found that a room temperature curable organopolysiloxane composition, in which a novel organopolysiloxane compound of the following general formula (1), in which an end (and side chain) is blocked with a hydrolyzable group (cycloalkenyloxysilyl group) releasing a cyclic ketone compound such as cyclopentanone as a leaving group (leaving compound) via a silalkylene bond, is used as a base polymer, and a hydrolyzable organosilane compound and/or a partial hydrolytic condensate thereof having a specific hydrolyzable group (cycloalkenyloxy group) whose leaving group (leaving compound) is a cyclic ketone compound such as cyclopentanone are contained as a crosslinking agent, solves the problems of harmfulness to the human body/environment and safety, and is excellent in moisture resistance and LLC resistance. The present inventors have also found that even if an organic compound containing titanium, guanidine or the like is added as a curing catalyst to the composition, the composition exhibits curability and cured product performance equivalent to those when a tin catalyst is added. 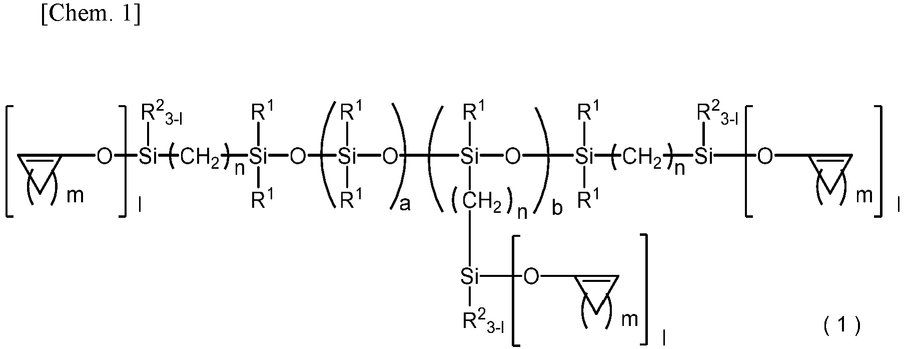 wherein each of R¹ and R² is an unsubstituted or substituted monovalent hydrocarbon group having 1 to 10 carbon atoms, R¹ and R² may be the same or different groups; and n is independently an integer of 2 to 10, m is independently an integer of 1 to 8, 1 is 2 or 3 independently for each silicon atom bonded, a is an integer of 50 to 3,000, and b is an integer of 0 to 10.

That is, the present invention provides an organopolysiloxane compound of the following general formula (1), a room temperature curable organopolysiloxane composition containing the organopolysiloxane compound as a base polymer, various articles (e.g. automobile parts, automobile oil seals, electrical or electronic parts, building structures, civil engineering structures, adhesive agents, sealing agents, potting agents and coating agents) including the composition or a cured product thereof, and the like.
[1] An organopolysiloxane compound of the following general formula (1): 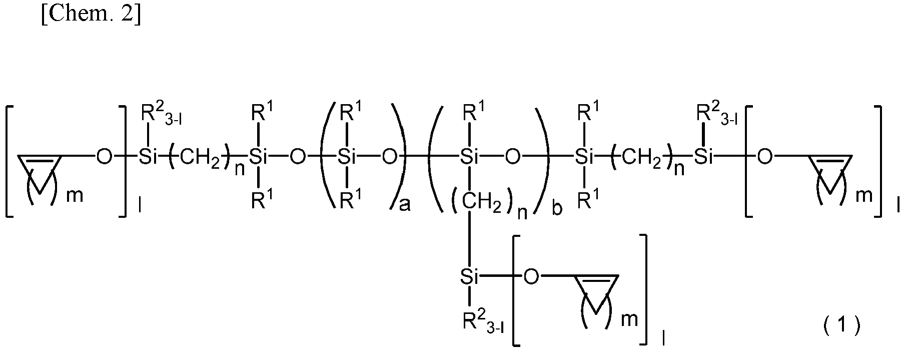 wherein each of R¹ and R² is an unsubstituted or substituted monovalent hydrocarbon group having 1 to 10 carbon atoms, and R¹ and R² may be the same or different groups; and n is independently an integer of 2 to 10, m is independently an integer of 1 to 8, 1 is 2 or 3 independently for each silicon atom bonded, a is an integer of 50 to 3,000, and b is an integer of 0 to 10.
[2] A room temperature curable organopolysiloxane composition including:
   (A) 100 parts by weight of an organopolysiloxane compound of the following general formula (1): 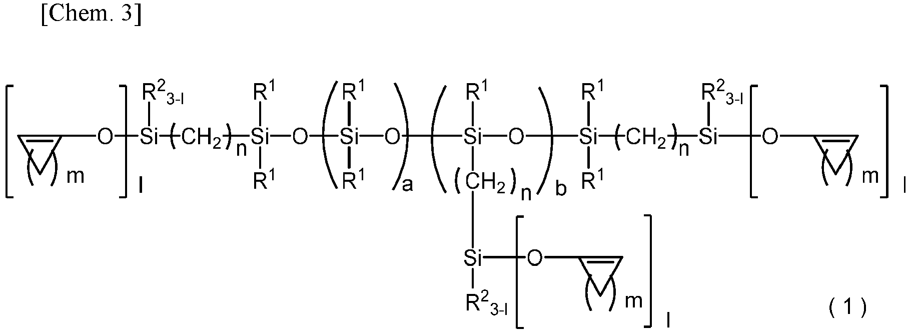 wherein each of R¹ and R² is an unsubstituted or substituted monovalent hydrocarbon group having 1 to 10 carbon atoms, and R¹ and R² may be the same or different groups; and n is independently an integer of 2 to 10, m is independently an integer of 1 to 8, 1 is 2 or 3 independently for each silicon atom bonded, a is an integer of 50 to 3,000, and b is an integer of 0 to 10;
   (B) 1 to 40 parts by weight of a hydrolyzable organosilane compound of the following general formula (2), and/or a partial hydrolytic condensate thereof: 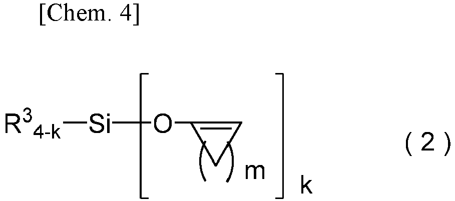 wherein R³ is a monovalent hydrocarbon group having 1 to 10 carbon atoms, m is an integer of 1 to 8, and k is 3 or 4.
[3] The room temperature curable organopolysiloxane composition according to [2], wherein the organopolysiloxane compound as the component (A) and the hydrolyzable organosilane compound and/or a partial hydrolytic condensate thereof as the component (B) each desorb a cyclic ketone compound by hydrolysis.
[4] The room temperature curable organopolysiloxane composition according to [3], wherein the cyclic ketone compound is cyclopentanone.
[5] The room temperature curable organopolysiloxane composition according to any one of [2] to [4], further including (C) 0.01 to 10 parts by weight of a curing catalyst per 100 parts by weight of the component (A).
[6] The room temperature curable organopolysiloxane composition according to [5], wherein the (C) curing catalyst contains at least one of a tin catalyst, a titanium catalyst, an organic strong base catalyst, and an organobismuth catalyst.
[7] The room temperature curable organopolysiloxane composition according to any one of [2] to [6], which is free of a tin catalyst.
[8] The room temperature curable organopolysiloxane composition according to any one of [2] to [7], further including (D) 0.01 to 10 parts by weight of a silane coupling agent of the following general formula (3) and/or a partial hydrolytic condensate thereof per 100 parts by weight of the component (A):

   R⁴R⁵_{c}SiX_{3-c} (3)

   wherein R⁴ is a monovalent hydrocarbon group having 1 to 20 carbon atoms and having at least one functional group containing one or more heteroatoms selected from a nitrogen atom, a sulfur atom and an oxygen atom, R⁵ is independently an unsubstituted or substituted monovalent hydrocarbon group having 1 to 10 carbon atoms, X is independently a hydrolyzable group, and c is 0, 1 or 2.
[9] The room temperature curable organopolysiloxane composition according to any one of [2] to [8], further including (E) 1 to 500 parts by weight of an inorganic filling agent per 100 parts by weight of the component (A).
[10] The room temperature curable organopolysiloxane composition according to [9], wherein the component (E) is one or more inorganic filling agents selected from calcium carbonate, fumed silica, precipitated silica, carbon black and aluminum oxide.
[11] An automobile part including a cured product of the room temperature curable organopolysiloxane composition according to any one of [2] to [10].
[12] An automobile oil seal including a cured product of the room temperature curable organopolysiloxane composition according to any one of [2] to [10].
[13] An electrical or electronic part including a cured product of the room temperature curable organopolysiloxane composition according to any one of [2] to [10].
[14] A building structure including a cured product of the room temperature curable organopolysiloxane composition according to any one of [2] to [10].
[15] A civil engineering structure including a cured product of the room temperature curable organopolysiloxane composition according to any one of [2] to [10].
[16] An adhesive agent including the room temperature curable organopolysiloxane composition according to any one of [2] to [10].
[17] A sealing agent including the room temperature curable organopolysiloxane composition according to any one of [2] to [10].
[18] A potting agent including the room temperature curable organopolysiloxane composition according to any one of [2] to [10].
[19] A coating agent including the room temperature curable organopolysiloxane composition according to any one of [2] to [10].

### ADVANTAGEOUS EFFECTS OF INVENTION

The room temperature curable organopolysiloxane composition of the present invention can be suitably used for various adhesive agents, sealing agents, potting agents, coating agents and the like favoring the health and safety of the human body because a compound (leaving compound) generated from a base polymer and a crosslinking agent through a hydrolysis reaction during curing is a cyclic ketone compound having high safety, such as cyclobutanone or cyclopentanone, and the composition is excellent in curability and adhesive property after curing, and gives a silicone rubber cured product (elastomeric organopolysiloxane cured product) having good durability.

Further, in the room temperature curable organopolysiloxane composition of the present invention, a novel organopolysiloxane compound having a hydrolyzable silyl group (cycloalkenyloxysilyl group), which releases a cyclic ketone compound as a leaving group via a silalkylene bond, at a molecular chain end (also at a side chain) thereof is used as a base polymer, and a hydrolyzable organosilane compound and/or a partial hydrolytic condensate thereof having a hydrolyzable group (cycloalkenyloxy group) releasing a cyclic ketone compound as a leaving group are also used as a crosslinking agent. Thus, the room temperature curable organopolysiloxane composition has high moisture resistance and LLC resistance, and can be suitably used for various adhesive agents, sealing agents, potting agents, coating agents and the like favoring environmental protection (reduction of hazardousness).

### DESCRIPTION OF EMBODIMENTS

Hereinafter, the present invention is described in detail. In the present invention, the viscosity is a value measured with a rotational viscometer in accordance with the method specified in JIS Z 8803. The term "room temperature" of the "room temperature curable organopolysiloxane composition" refers to a state of in which the temperature is 23°C ± 15°C and the humidity is 50% RH ± 5% RH.

### [Organopolysiloxane compound]

A novel organopolysiloxane compound of the present invention has the following general formula (1): 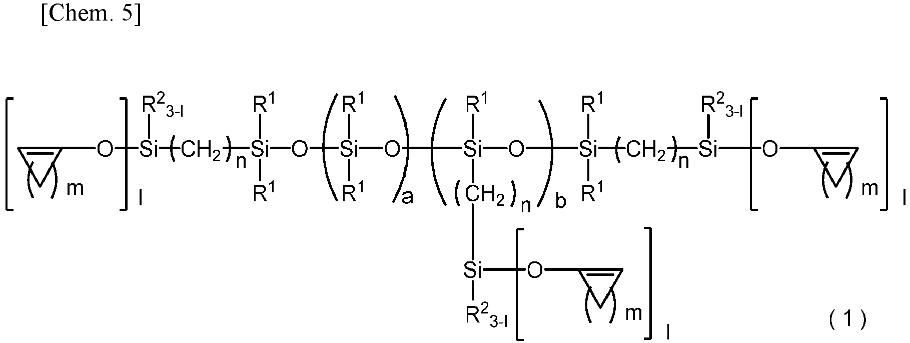 wherein each of R¹ and R² is an unsubstituted or substituted monovalent hydrocarbon group having 1 to 10 carbon atoms, R¹ and R² may be the same or different groups; and n is independently an integer of 2 to 10, m is independently an integer of 1 to 8, l is 2 or 3 independently for each silicon atom bonded, a is an integer of 50 to 3,000, and b is an integer of 0 to 10.

In the above formula (1), R¹ is an unsubstituted or substituted monovalent hydrocarbon group having 1 to 10, particularly 1 to 6 carbon atoms, and examples thereof include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; cycloalkyl groups such as a cyclohexyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Alternatively, groups in which a part of hydrogen atoms of any of the above-mentioned hydrocarbon groups is replaced by a halogen atom or the like such as chlorine, fluorine or bromine, for example, a trifluoropropyl group or the like are mentioned. The unsubstituted or substituted monovalent hydrocarbon group of R¹ is preferably one that is free of an aliphatic unsaturated bond, and specifically, an alkyl group such as a methyl group or an aryl group such as a phenyl group is more preferable, and a methyl group is particularly preferable. R¹s may be the same group or different groups.

In the general formula (1), a substituent R² bonded to a silicon atom on a hydrolyzable silyl group (cycloaklenyloxysilyl group) at a molecular chain end is a monovalent hydrocarbon group having 1 to 10 carbon atoms, in particular, a monovalent aliphatic hydrocarbon group having 1 to 10, preferably 1 to 6 carbon atoms, an alkyl group having 6 to 10 carbon atoms, or an aralkyl group having 7 to 10 carbon atoms, and examples of R² include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Alternatively, groups in which a part of hydrogen atoms of any of the above-mentioned hydrocarbon groups is replaced by a halogen atom or the like such as chlorine, fluorine or bromine, for example, a trifluoropropyl group or the like are mentioned. Among them, a methyl group, an ethyl group, and a phenyl group are preferable, and a methyl group, and an ethyl group are particularly preferable.

In the above formula (1), "a", which indicates the number (or polymerization degree) of repeating difunctional diorganosiloxane units (SiR¹₂O_{2/2}) forming the main chain is an integer of 50 to 3,000, preferably an integer of 50 to 2,000, more preferably an integer of 100 to 1,500, particularly preferably an integer of 200 to 1,200.

In the present invention, the polymerization (or molecular weight) can be determined as, for example, a numerical average polymerization degree (or numerical average molecular weight) or the like in terms of polystyrene in gel permeation chromatography (GPC) analysis using toluene, tetrahydrofuran (THF) or the like as a developing solvent.

In the above formula (1), b associated with a side branch structure is an integer of 0 to 10, preferably an integer of 0 to 8, more preferably an integer of 0 to 4, particularly preferably an integer of 0 to 2.

The repeat units indicated in parentheses with subscripts a and b may be randomly bonded.

In the above formula (1), n indicating the chain length of a silalkylene bond is independently an integer of 2 to 10, preferably an integer of 2 to 8, more preferably an integer of 2 to 6, particularly preferably 2.

In the above general formula (1), m is independently an integer of 1 to 8, preferably an integer of 2 to 6, more preferably an integer of 2 to 4, still more preferably 2 or 3. If m is 0, a cyclic structure is not formed. If m is an integer of more than 8, it is difficult to purify an organosilicon compound having a hydrosilyl group and a hydrolyzable group and serving as a raw material.

In the above formula (1), l is 2 or 3 independently for each silicon atom bonded. If this number is less than 2, rubber curing through a crosslinking reaction does not occur, and the component is not suitable as a base polymer of a room temperature curable organopolysiloxane composition.

The viscosity of the organopolysiloxane compound of the above formula (1) at 23°C is preferably 20 to 1,000,000 mPa·s, more preferably 100 to 300,000 mPa·s, still more preferably 1,000 to 200,000 mPa·s, particularly preferably 10,000 to 100,000 mPa·s.

The leaving group (leaving compound) generated by hydrolysis of the organopolysiloxane compound of the general formula (1) is a cyclic ketone compound such as cyclopropanone, cyclobutanone, cyclopentanone, cyclohexanone, cycloheptanone, cyclooctanone, cyclononanone or cyclodecanone, preferably cyclobutanone or cyclopentanone, more preferably cyclopentanone. Cyclobutanone and cyclopentanone have not been reported to have health harmfulness to the human body such as carcinogenicity and reproduction toxicity, or environmental harmfulness such as toxicity to aquatic organisms. Since cyclopentanone is industrially mass-produced, and easily obtained, and has high cost competitiveness, cyclopentanone is advantageous for production of an organopolysiloxane compound of the general formula (1) as described later.

The organopolysiloxane compound of the general formula (1) according to the present invention can be produced by, for example, subjecting an organopolysiloxane having alkenyl groups at a molecular chain end (and side chain) thereof and an organosilicon compound having a hydrosilyl group and a hydrolyzable group having groups releasing a cyclic ketone compound to a hydrosilylation addition reaction using a platinum catalyst as described in the following formula [1].

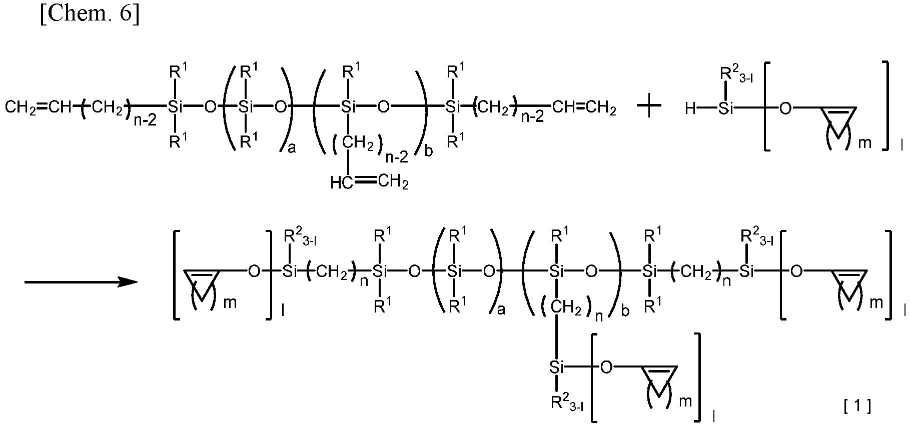

Here, as the organopolysiloxane having alkenyl groups at the molecular chain end (and side chain) thereof, those shown below can be exemplified. 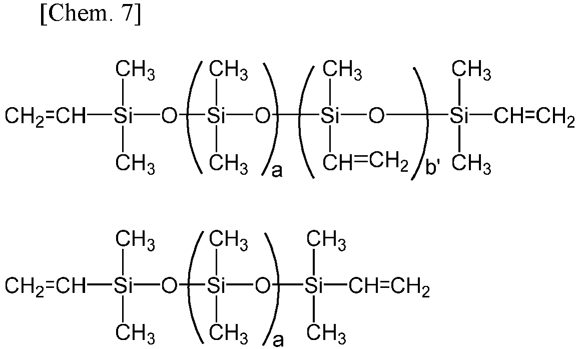 wherein "a" is the same as described above; and b' is an integer of 1 to 10, preferably an integer of 1 to 8, more preferably an integer of 1 to 4, particularly preferably an integer of 1 to 2.

As the organosilicon compound having a hydrosilyl group and a hydrolyzable group having groups releasing a cyclic ketone compound, those shown below can be exemplified.

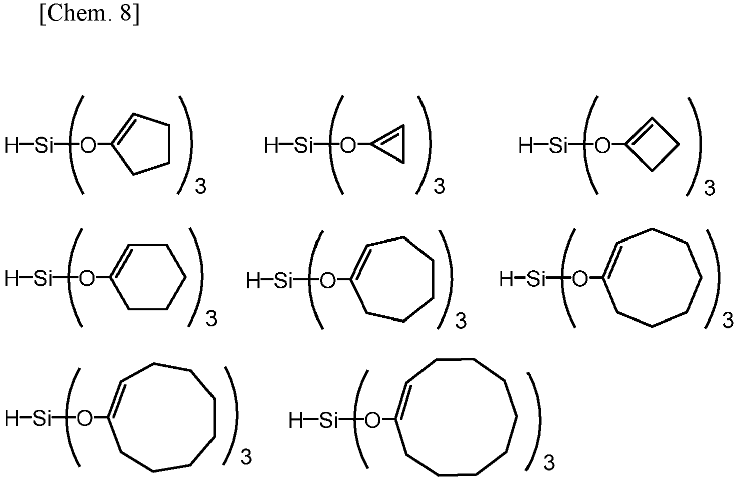

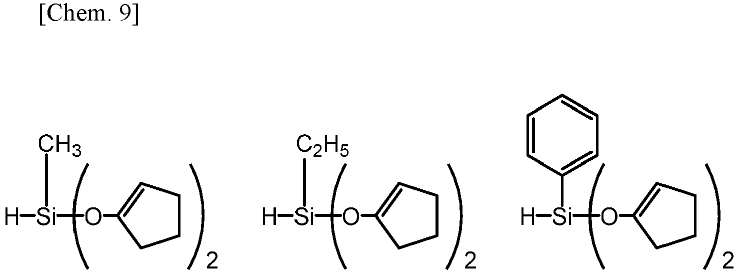

Here, the organosilicon compound having a hydrosilyl group and a hydrolyzable group having groups releasing a cyclic ketone compound can be produced by, for example, reaction (e.g. dehydrochlorination reaction) of a chlorosilane compound and a cyclic ketone compound in the presence of a catalyst and a basic substance.

As the chlorosilane compound, in the production of the organosilicon compound having a hydrosilyl group and a hydrolyzable group having groups releasing a cyclic ketone compound, those shown below can be exemplified.

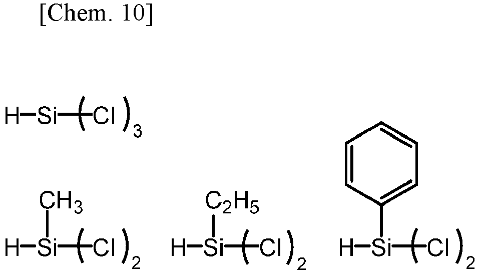

As the cyclic ketone compound, in the production of the organosilicon compound having a hydrosilyl group and a hydrolyzable group having groups releasing a cyclic ketone compound, those shown below can be exemplified.

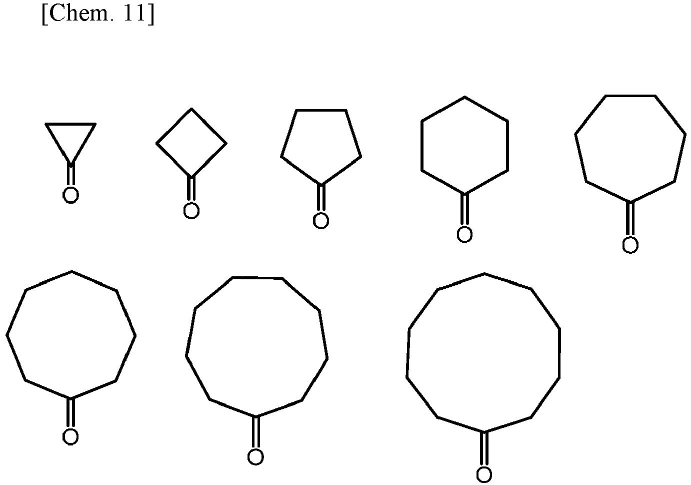

In the production of the organosilicon compound having a hydrosilyl group and a hydrolyzable group having groups releasing a cyclic ketone compound, the addition amount of the cyclic ketone compound reacted with the chlorosilane compound is preferably 0.95 to 3.0 mol, more preferably 0.99 to 2.5 mol, still more preferably 1.0 to 2.0 mol per 1 mol of chlorine atoms in the chlorosilane compound. If the addition amount of the cyclic ketone compound is excessively small, there is a possibility that the reaction is not completed, and if the addition amount of the cyclic ketone compound is excessively large, much time may be required for purification, leading to an increase in production time.

In the production of the organosilicon compound having a hydrosilyl group and a hydrolyzable group having groups releasing a cyclic ketone compound, examples of the catalyst used in the reaction include, but are not limited to, monovalent or divalent metal copper compounds, for example, copper chloride, copper bromide, copper iodide, copper sulfate, copper nitrate, copper carbonate, basic copper carbonate, copper formate, copper acetate, and copper butyrate.

The addition amount of the catalyst (metal copper compound) is preferably 0.001 to 0.5 mol, more preferably 0.002 to 0.2 mol, still more preferably 0.003 to 0.1 mol per 1 mol of the chlorosilane compound. If the addition amount of the catalyst is excessively small, there is a possibility that the reaction is not completed, and if the addition amount of the catalyst is excessively large, a disadvantage in terms of cost arises.

As the basic substance used in the reaction, in the production of the organosilicon compound having a hydrosilyl group and a hydrolyzable group having groups releasing a cyclic ketone compound, basic substances having low nucleophilicity, such as trimethylamine, triethylamine, tripropylamine, tributylamine, urea, diazabicycloundecene and diazabicyclononene, can be used. Among them, trimethylamine, triethylamine and tributylamine are preferable, and triethylamine is particularly preferable.

The addition amount of the basic substance is preferably 0.95 to 2.5 mol, more preferably 0.99 to 2.0 mol, still more preferably 1.0 to 1.5 mol per 1 mol of chlorine atoms in the chlorosilane compound. If the addition amount of the basic substance is excessively small, there is a possibility that the reaction is not completed, and if the amount of addition of the basic substance is excessively large, an economic disadvantage arises.

In the production of the organosilicon compound having a hydrosilyl group and a hydrolyzable group having groups releasing a cyclic ketone compound, a commonly used solvent may be used, and examples of the solvent include organic solvents such as aromatic hydrocarbons such as toluene, xylene and benzene; aliphatic hydrocarbons such as pentane, hexane, heptane, nonane, octane and decane; ethers such as dimethyl ether, methyl ethyl ether, tetrahydrofuran and dioxane; halogenated hydrocarbons such as perchloroethane, perchloroethylene, trichloroethane, chloroform and carbon tetrachloride; amides such as dimethylformamide; and esters such as ethyl acetate, methyl acetate and butyl acetate.

The amount used of the solvent is not particularly limited, and is, typically, in the range of 10 to 500 parts by weight, preferably 30 to 400 parts by weight, more preferably 50 to 300 parts by weight per 100 parts by weight of the cyclic ketone compound used.

For the condition of the reaction between the chlorosilane compound and the cyclic ketone compound, in the production of the organosilicon compound having a hydrosilyl group and a hydrolyzable group having groups releasing a cyclic ketone compound, it is preferable that typically, the chlorosilane compound is added dropwise to the cyclic ketone compound at a temperature of 0 to 120°C, preferably 0 to 100°C, and the mixture is reacted at 50 to 120°C, preferably 60 to 100°C for 1 to 48 hours, more preferably for about 3 to 30 hours. If the temperature during the reaction is excessively low, there is a possibility that the reaction is not completed, and if the temperature during the reaction is excessively high, coloring of the product may increase. If the reaction time is excessively short, there is a possibility that the reaction is not completed, and if the reaction time is excessively long, productivity is adversely affected.

Purification after completion of the reaction can be performed by distilling an intended product in a decompression environment, and the decompression degree is preferably 1×10⁻⁵ to 3,000 Pa, more preferably 1×10⁻⁵ to 2,000 Pa, and the temperature during purification is preferably 100 to 250°C, more preferably 120 to 230°C. If the pressure during decompression (decompression degree) is excessively high, distillation may be difficult. If the temperature during purification is excessively low, purification by distillation may be difficult, and an excessively high temperature during purification may cause coloring and decomposition of the reactant.

In the production of the organopolysiloxane compound of the general formula (1), the amount used of the organosilicon compound having a hydrosilyl group and a hydrolyzable group having groups releasing a cyclic ketone compound, which is reacted with the organopolysiloxane having alkenyl groups at a molecular chain end (and side chain) thereof is preferably 1 to 10 mol, more preferably 1.1 to 8 mol, still more preferably 1.2 to 6 mol per 1 mol of alkenyl groups in the organopolysiloxane. If the amount of the organosilicon compound is excessively small, it may be the case that the hydrosilylation addition reaction does not sufficiently proceed (is not completed), and if the amount of the organosilicon compound is excessively large, a disadvantage in terms of cost may arise.

Examples of the platinum catalyst used in the reaction in the production of the organopolysiloxane compound of the general formula (1) include chloroplatinic acid, alcohol solutions of chloroplatinic acid, reaction products of chloroplatinic acid and alcohol, platinum-olefin compound complexes, platinum-vinyl group-containing siloxane complexes, and platinum-supported carbon.

The addition amount of the platinum catalyst is, typically, preferably 1 to 200 ppm, more preferably 3 to 100 ppm in terms of platinum atoms (on a mass basis) per the total mass of the organopolysiloxane having alkenyl groups at a molecular chain end (and side chain) thereof and the organosilicon compound having a hydrosilyl group and a hydrolyzable group having groups releasing a cyclic ketone compound. If the amount of the platinum is excessively small, it may be the case that the hydrosilylation addition reaction does not sufficiently proceed (is not completed), and if the amount of the platinum catalyst is excessively large, a disadvantage in terms of cost may arise.

In the production of the organopolysiloxane compound of the general formula (1), a commonly used solvent may be used, and examples of the solvent include organic solvents such as aromatic hydrocarbons such as toluene, xylene and benzene; aliphatic hydrocarbons such as pentane, hexane, heptane, nonane, octane and decane; ethers such as dimethyl ether, methyl ethyl ether, tetrahydrofuran and dioxane; halogenated hydrocarbons such as perchloroethane, perchloroethylene, trichloroethane, chloroform and carbon tetrachloride; amides such as dimethylformamide; and esters such as ethyl acetate, methyl acetate and butyl acetate.

When a solvent is used, the amount used of the solvent is not particularly limited, and is, typically, in the range of 10 to 500 parts by weight, preferably 20 to 400 parts by weight, more preferably 50 to 200 parts by weight per 100 parts by weight of the organopolysiloxane having alkenyl groups at a molecular chain end (and side chain).

For the condition of the reaction between the organopolysiloxane having alkenyl groups at a molecular chain end (and side chain) thereof and the organosilicon compound having a hydrosilyl group and a hydrolyzable group having groups releasing a cyclic ketone compound, in the production of the organopolysiloxane compound of the general formula (1), it is preferable that the organosilicon compound having a hydrosilyl group and a hydrolyzable group having groups releasing a cyclic ketone compound is added dropwise to the organopolysiloxane having alkenyl groups at a molecular chain end (and side chain) thereof at a temperature of typically 30 to 120°C, preferably 50 to 100°C, followed by reaction at 40 to 140°C, preferably 60 to 120°C for 1 to 24 hours, more preferably about 4 to 12 hours. If the temperature during the reaction is excessively low, it may be the case that the hydrosilylation addition reaction does not sufficiently proceed (is not completed), and if the temperature during the reaction is excessively high, a target material may be discolored (turn yellowish). If the reaction time is excessively short, it may be the case that the hydrosilylation addition reaction is not completed, and if the reaction time is excessively long, a disadvantage in terms of productivity may arise.

Purification after completion of the reaction can be performed by distilling an intended product in a decompression environment, and the decompression degree is preferably 1×10⁻⁵ to 10,000 Pa, more preferably 1×10⁻⁵ to 3,000 Pa, and the temperature during purification is preferably 120 to 250°C, more preferably 150 to 230°C. If the pressure during decompression (decompression degree) is excessively high, distillation may be difficult. If the temperature during purification is excessively low, purification by distillation may be difficult, and an excessively high temperature during purification may cause coloring and decomposition of the reactant.

Specific examples of the organopolysiloxane compound of the formula (1) according to the present invention include compounds of the following formulae. 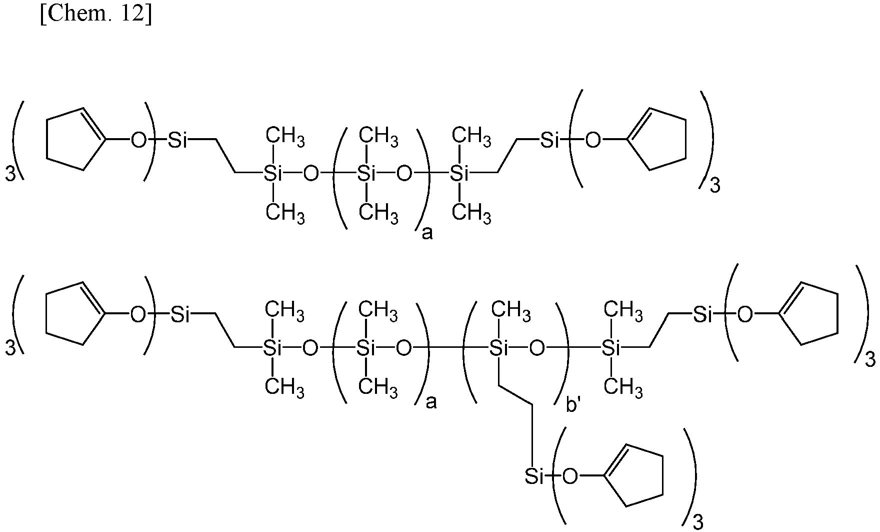 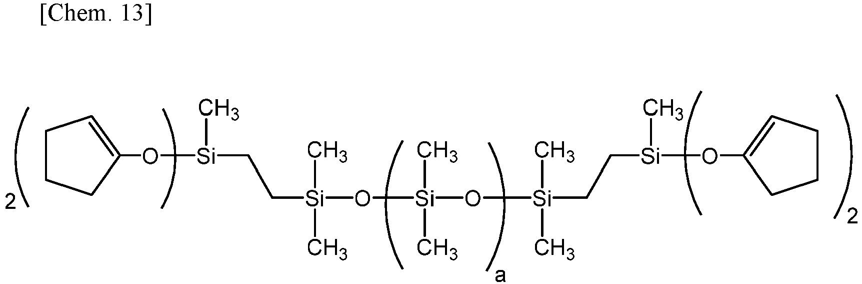 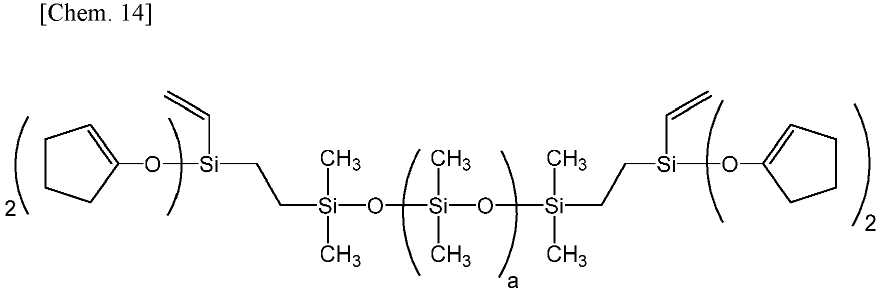 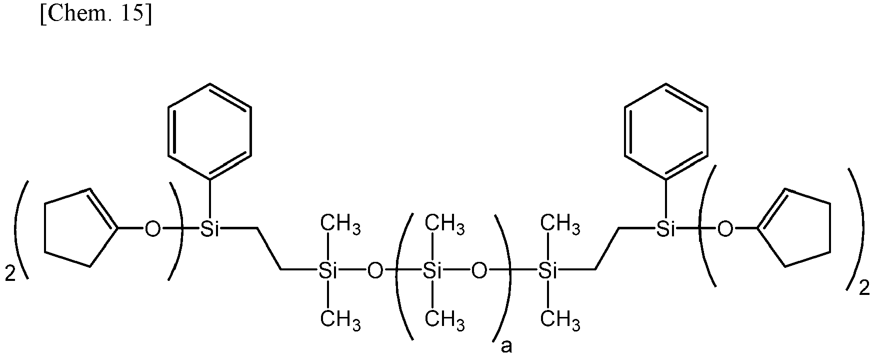 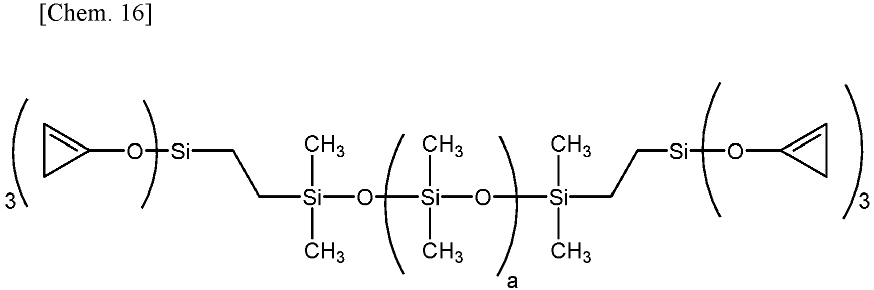 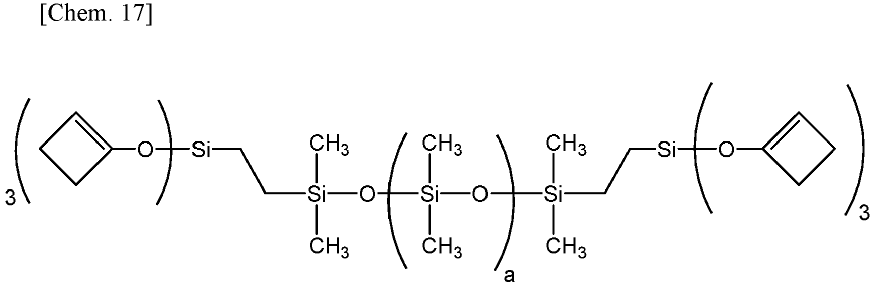 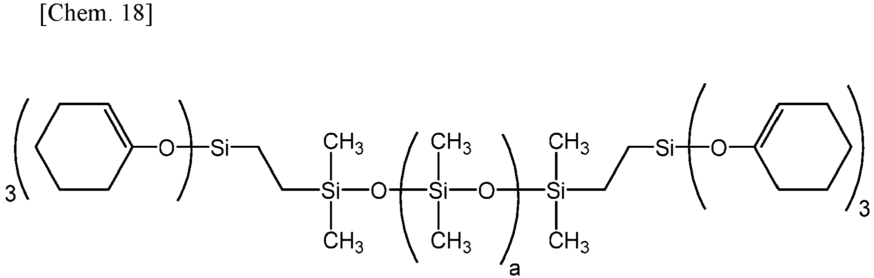 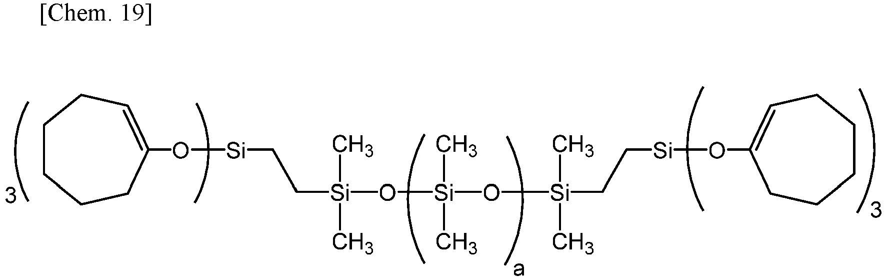 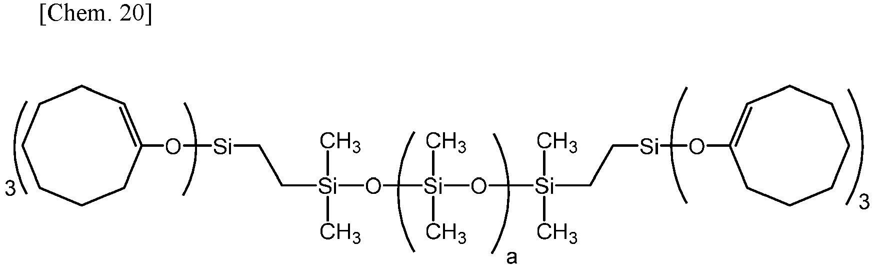 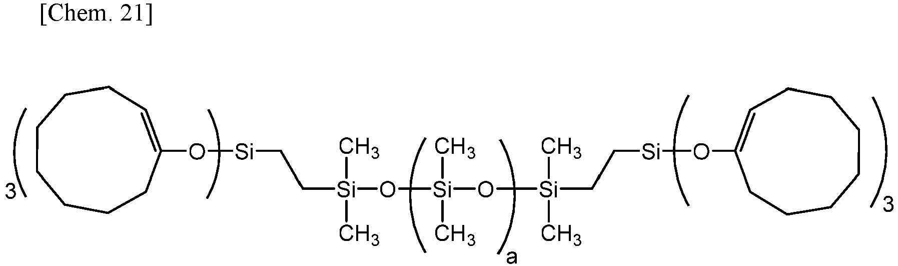 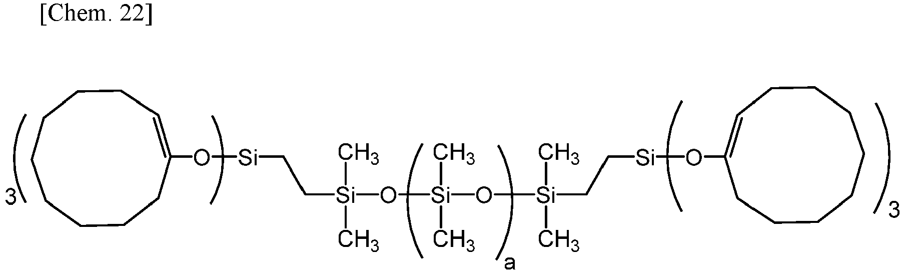 wherein a and b' are the same as described above.

### [Room temperature curable organopolysiloxane composition]

In the room temperature curable organopolysiloxane composition of the present invention, the novel organopolysiloxane compound of the general formula (1) is used as a base polymer (component (A)), and a hydrolyzable organosilane compound and/or a partial hydrolytic condensate thereof having a specific structure are contained as a crosslinking agent (component (B)). Hereinafter, components blended in the room temperature curable organopolysiloxane composition will be described in detail.

### [Component (A): organopolysiloxane compound]

The component (A) used for the room temperature curable organopolysiloxane composition of the present invention is the organopolysiloxane compound of the following general formula (1). 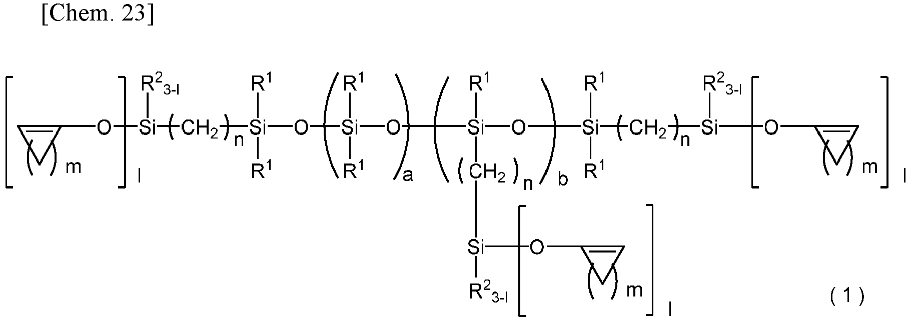 wherein R¹, R², n, m, l, a and b are the same as described above.

The component (A) is a diorganopolysiloxane which has a viscosity of preferably 20 to 1,000,000 mPa s at 23°C and has a linear or branched chain structure and in which the main chain includes repeating diorganosiloxane units as shown in formula (1) and both ends of the molecular chain (and optionally a part of the side chain of the molecular chain) are blocked with a hydrolyzable silyl group (cycloalkenyloxysilyl group) having groups releasing a cyclic ketone compound. The component (A) acts as a main component (base polymer) of the room temperature curable organopolysiloxane composition of the present invention, and releases a cyclic ketone compound such as cyclopentanone as a leaving group (leaving substance) by hydrolysis.

The viscosity of the organopolysiloxane compound as the component (A) at 23 °C is preferably 20 to 1,000,000 mPa·s, more preferably 100 to 300,000 mPa·s, still more preferably 1,000 to 200,000 mPa s, particularly preferably 10,000 to 100,000 mPa s. If the viscosity of the organopolysiloxane compound is less than the lower limit value (20 mPa s), an economic disadvantage arises because a large amount of a component (B) described later is required. It is not preferable that the viscosity of the organopolysiloxane compound is more than the upper limit value (1,000,000 mPa s) because workability is deteriorated.

The organopolysiloxane compounds as the component (A) may be used alone or in combination of two or more thereof.

### [Component (B): hydrolyzable organosilane compound and/or partial hydrolytic condensate thereof]

The component (B) used for the room temperature curable organopolysiloxane composition of the present invention is a hydrolyzable organosilane compound of the following general formula (2) and/or a partial hydrolytic condensate thereof, is used as a crosslinking agent (curing agent), and releases a cyclic ketone compound such as cyclopentanone as a leaving group (leaving substance) by hydrolysis.

In the present invention, the term "partial hydrolytic condensate" means an organosiloxane oligomer which is generated by partially hydrolyzing and condensing the hydrolyzable organosilane compound and has three or more, preferably four or more remaining hydrolyzable groups in the molecule. 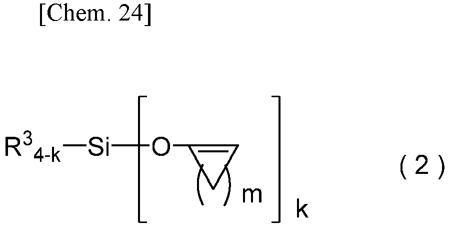 wherein R³ is a monovalent hydrocarbon group having 1 to 10 carbon atoms, m is independently an integer of 1 to 8, and k is 3 or 4.

In the general formula (2), R³ is a monovalent hydrocarbon group having 1 to 10 carbon atoms, in particular, a monovalent aliphatic hydrocarbon group having 1 to 10, preferably 1 to 6 carbon atoms, an aryl group having 6 to 10 carbon atoms, or an aralkyl group having 7 to 10 carbon atoms, and examples of R³ include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Among them, a methyl group, an ethyl group, a vinyl group, and a phenyl group are preferable, and a vinyl group and a phenyl group are particularly preferable.

In the above general formula (2), m is independently an integer of 1 to 8, preferably an integer of 2 to 6, more preferably an integer of 2 to 4, still more preferably 2 or 3. If m is 0, a cyclic structure is not formed. If m is an integer of more than 8, the molecular weight of the hydrolyzable organosilane compound increases, so that purification by distillation becomes difficult, or a disadvantage in terms of cost arises because the amount of addition necessary for securing storage-ability increases.

In the above formula (2), k is 3 or 4. If this number is less than 3 (i.e., if k is 0, 1 or 2,), rubber curing through a crosslinking reaction does not occur, and the component is not suitable as a crosslinking agent for a room temperature curable organopolysiloxane composition.

The leaving group (leaving compound) generated by hydrolysis of the hydrolyzable organosilane compound represented of the general formula (2) is a cyclic ketone compound such as cyclopropanone, cyclobutanone, cyclopentanone, cyclohexanone, cycloheptanone, cyclooctanone, cyclononanone or cyclodecanone, preferably cyclobutanone or cyclopentanone, more preferably cyclopentanone. Cyclobutanone and cyclopentanone have not been reported to have health harmfulness to the human body such as carcinogenicity and reproduction toxicity, or environmental harmfulness such as toxicity to aquatic organisms. Since cyclopentanone is industrially mass-produced, and easily obtained, and is inexpensive, cyclopentanone is advantageous for production of a hydrolyzable organosilane compound as the component (B) as described later.

The hydrolyzable organosilane compound as the component (B) can be produced by, for example, reaction (e.g. dehydrochlorination reaction) of a chlorosilane compound and a cyclic ketone compound, corresponding to the hydrolyzable organosilane compound of the general formula (2) as a product in the presence of a catalyst and a basic substance. This reaction formula is represented by, for example, the following formula [2]. 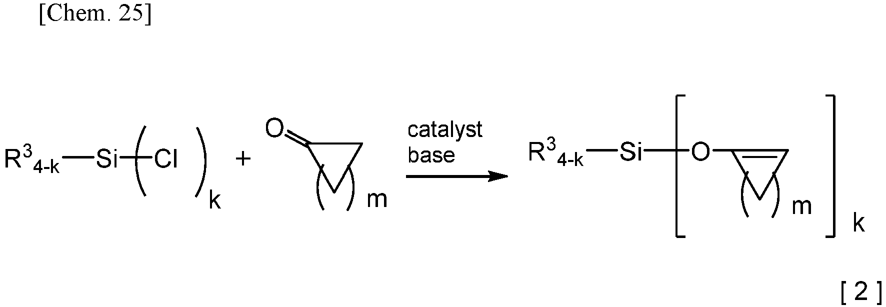 wherein R³, m and k are as described above.

Here, examples of the chlorosilane compound include those shown below.

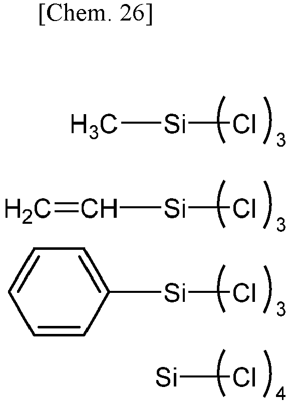

Here, examples of the cyclic ketone compound include those shown below.

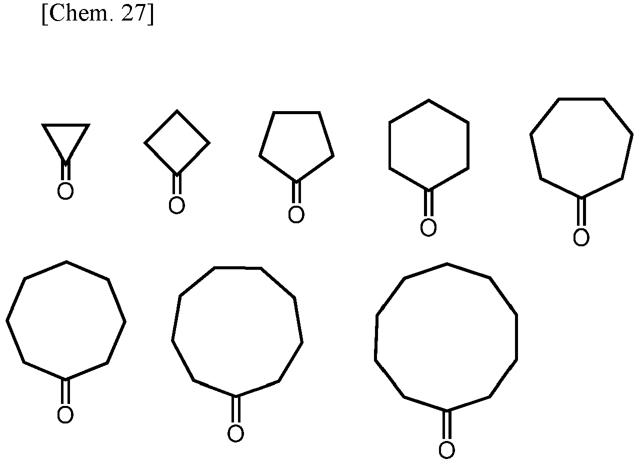

The addition amount of the cyclic ketone compound reacted with the chlorosilane compound is preferably 0.95 to 3.0 mol, more preferably 0.99 to 2.5 mol, still more preferably 1.0 to 2.0 mol per 1 mol of chlorine atoms in the chlorosilane compound. If the addition amount of the cyclic ketone compound is excessively small, there is a possibility that the reaction is not completed, and if the addition amount of the cyclic ketone compound is excessively large, much time may be required for purification, leading to an increase in production time.

Examples of the catalyst used in the reaction include, but are not limited to, monovalent or divalent metal copper compounds, for example, copper chloride, copper bromide, copper iodide, copper sulfate, copper nitrate, copper carbonate, basic copper carbonate, copper formate, copper acetate, and copper butyrate.

The addition amount of the catalyst (metal copper compound) is preferably 0.001 to 0.5 mol, more preferably 0.002 to 0.2 mol, still more preferably 0.003 to 0.1 mol per 1 mol of the chlorosilane compound. If the addition amount of the catalyst is excessively small, there is a possibility that the reaction is not completed, and if the addition amount of the catalyst is excessively large, a disadvantage in terms of cost arises.

As the basic substance used in the reaction, basic substances having low nucleophilicity, such as trimethylamine, triethylamine, tripropylamine, tributylamine, urea, diazabicycloundecene and diazabicyclononene, can be used. Among them, trimethylamine, triethylamine and tributylamine are preferable, and triethylamine is particularly preferable.

The addition amount of the basic substance is preferably 0.95 to 2.5 mol, more preferably 0.99 to 2.0 mol, still more preferably 1.0 to 1.5 mol per 1 mol of chlorine atoms in the chlorosilane compound. If the addition amount of the basic substance is excessively small, there is a possibility that the reaction is not completed, and if the addition amount of the basic substance is excessively large, an economic disadvantage arises.

For production of the hydrolyzable organosilane compound as the component (B), a commonly used solvent may be used, and examples of the solvent include organic solvents, for example, aromatic hydrocarbons such as toluene, xylene and benzene; aliphatic hydrocarbons such as pentane, hexane, heptane, nonane, octane and decane; ethers such as dimethyl ether, methyl ethyl ether, tetrahydrofuran and dioxane; halogenated hydrocarbons such as perchloroethane, perchloroethylene, trichloroethane, chloroform and carbon tetrachloride; amides such as dimethylformamide; and esters such as ethyl acetate, methyl acetate and butyl acetate.

The amount used of the solvent is not particularly limited, and is, typically, in the range of 10 to 500 parts by weight, preferably 30 to 400 parts by weight, more preferably 50 to 300 parts by weight per 100 parts by weight of the cyclic ketone compound used.

For the condition of the reaction between the chlorosilane compound and the cyclic ketone compound, it is preferable that typically, the chlorosilane compound is added dropwise to the cyclic ketone compound at a temperature of 0 to 120°C, preferably 0 to 100°C, and the mixture is reacted at 50 to 120°C, preferably 60 to 100°C for 1 to 48 hours, more preferably for about 3 to 30 hours. If the temperature during the reaction is excessively low, there is a possibility that the reaction is not completed, and if the temperature during the reaction is excessively high, coloring of the product may increase. If the reaction time is excessively short, there is a possibility that the reaction is not completed, and if the reaction time is excessively long, productivity is adversely affected.

Purification after completion of the reaction can be performed by distilling an intended product in a decompression environment, and the decompression degree is preferably 1×10⁻⁵ to 3,000 Pa, more preferably 1×10⁻⁵ to 2,000 Pa, and the temperature during purification is preferably 100 to 250°C, more preferably 120 to 230°C. If the pressure during decompression (decompression degree) is excessively high, distillation may be difficult. If the temperature during purification is excessively low, purification by distillation may be difficult, and an excessively high temperature during purification may cause coloring and decomposition of the reactant.

Specific examples of the hydrolyzable organosilane compound as the component (B) include compounds of the following formula.

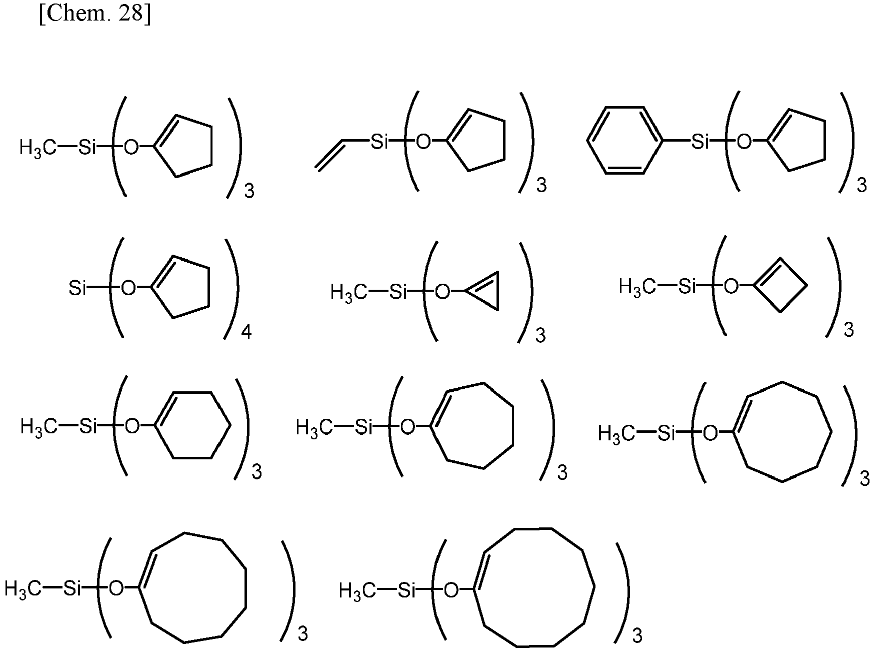

The components (B) may be used alone or used in combination of two or more thereof.

The compounding amount of the component (B) is 1 to 40 parts by weight, preferably 3 to 30 parts by weight, more preferably 5 to 20 parts by weight per 100 parts by weight of the component (A). If the compounding amount of the component (B) is less than 1 part by weight as the lower limit value, storage-ability during storage in a sealed container may be deteriorated. If the compounding amount of the component (B) is more than 40 parts by weight as the upper limit value, there is a possibility that the curability of the room temperature curable organopolysiloxane composition is significantly deteriorated, and the adhesive property is deteriorated.

The hydrolyzable organosilane compound and/or the partial hydrolytic condensate thereof as the component (B) are clearly distinct from a silane coupling agent and/or a partial hydrolytic condensate thereof as a component (D) as an optional component described later in that the component (B) does not have a monovalent hydrocarbon group having at least one functional group containing one or more heteroatoms selected from a nitrogen atom, a sulfur atom and an oxygen atom in the molecule.

### [Component (C): curing catalyst]

In the room temperature curable organopolysiloxane composition of the present invention, a curing catalyst as a component (C) can be blended as an optional component if necessary. As the curing catalyst as the component (C), a metallic or nonmetallic condensation catalyst generally used heretofore as a curing accelerator for a room temperature curable organopolysiloxane composition can be used. Examples thereof include organotin compounds (tin catalysts) such as dibutyltin methoxide, dibutyltin diacetate, dibutyltin dioctate, dibutyltin dilaurate, dioctyltin dilaurate, dioctyltin dioctate, dimethyltin dimethoxide and dimethyltin diacetate; organotitanium compounds (titanium catalysts) such as tetrapropyl titanate, tetrabutyl titanate, tetra-2-ethylhexyl titanate, dimethoxytitanium diacetylacetonate and titanium diisopropoxybis(ethylacetoacetate); amine compounds such as triethylamine, hexylamine, tetramethylguanidine and γ-tetramethylguanidylpropyltrimethoxysilane and salts thereof (organic strong base catalysts); and organobismuth compounds such as bismuth(2-ethylhexanoate) and bismuth(neodecanoate) and mixtures thereof (organobismuth catalysts). At least any one of these compounds can be used, i.e., the compounds can be used alone or in combination of two or more thereof.

In the present invention, curability and cured product performance equivalent to those when a tin catalyst is blended are exhibited by compounding any of a titanium catalyst, an organic strong base catalyst and an organobismuth catalyst among the above-described catalysts, and therefore from the viewpoint of environmental protection, it is preferable that a tin catalyst is not blended, and a titanium catalyst, an organic strong base catalyst or an organobismuth catalyst is blended.

The compounding amount of the component (C) which may be blended is preferably 0.01 to 10 parts by weight, more preferably 0.05 to 8 parts by weight, still more preferably 0.1 to 5 parts by weight per 100 parts by weight of the component (A). If the compounding amount of the component (E) is less than 0.01 parts by weight as the lower limit value, there is a possibility that a catalytic effect cannot be obtained, and if the compounding amount of the component (E) is more than 10 parts by weight as the upper limit value, the composition may have poor storage stability.

### [Component (D): silane coupling agent and/or partial hydrolytic condensate thereof]

In the room temperature curable organopolysiloxane composition of the present invention, a silane coupling agent and/or a partial hydrolytic condensate thereof as a component (D) can be blended as an optional component if necessary. The component (D) is a silane coupling agent of the following general formula (3) (i.e., a hydrolyzable organosilane compound having a functional group-containing monovalent hydrocarbon group or a carbon functional silane) and/or a partial hydrolytic condensate thereof, which is a component for exhibiting good adhesive property in a cured product of the room temperature curable organopolysiloxane composition of the present invention.

R⁴R⁵_{c}SiX_{3-c} (3)

wherein R⁴ is a monovalent hydrocarbon group having 1 to 20 carbon atoms and having at least one functional group (with exclusion of a guanidyl group) containing one or more heteroatoms selected from a nitrogen atom, a sulfur atom and an oxygen atom; R⁵ is independently an unsubstituted or substituted monovalent hydrocarbon group having 1 to 10 carbon atoms, and X is independently a hydrolyzable group; and c is 0, 1 or 2.

In the formula (3), R⁴ represents a monovalent hydrocarbon group having 1 to 20 carbon atoms and having at least one functional group containing one or more heteroatoms selected from a nitrogen atom, a sulfur atom, and an oxygen atom (e.g. an unsubstituted or substituted amino group, an unsubstituted or substituted imino group, an amide group, a ureido group, a mercapto group, an epoxy group or a (meth)acryloxy group, with the exclusion of a guanidyl group), and specific examples thereof include monovalent hydrocarbon groups having preferably 3 to 20, more preferably 3 to 14 carbon atoms and containing at least one heteroatom selected from a nitrogen atom, a sulfur atom and an oxygen atom, such as β- (2,3-epoxycyclohexyl)ethyl group, a β- (3,4-epoxycyclohexyl)ethyl group, a γ-glycidoxypropyl group, a γ-methacryloxypropyl group, a γ-acryloxypropyl group, a N-β(aminoethyl)-γ-aminopropyl group [another name: N-2-(aminoethyl)-3-aminopropyl group], a γ-aminopropyl group, a N-phenyl-γ-aminopropyl group, a γ-ureidopropyl group, a γ-mercaptopropyl group and a γ-isocyanatopropyl group. R⁴ is particularly preferably a γ-glycidoxypropyl group, a γ-aminopropyl group or a N-β-(aminoethyl)-γ-aminopropyl group.

In the above formula (3), R⁵ is an unsubstituted or substituted monovalent hydrocarbon group having 1 to 10 carbon atoms, preferably 1 to 6 carbon atoms, and examples thereof include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; cycloalkyl groups such as a cyclohexyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Alternatively, groups in which a part of hydrogen atoms of any of the above-mentioned hydrocarbon groups is replaced by a halogen atom or the like such as chlorine, fluorine or bromine, for example, a trifluoropropyl group or the like are mentioned. Among them, a methyl group, an ethyl group, a propyl group and an isopropyl group are preferable. R⁵ may be the same group or different groups.

In the formula (3), examples of the hydrolyzable group X include a ketoxime group, an alkoxy group, an alkoxyalkoxy group, an acyloxy group, and an alkenyloxy group. Specific examples thereof include ketoxime groups having 3 to 8 carbon atoms, such as a dimethylketoxime group, a diethylketoxime group, a methylethylketoxime group and a methylisobutylketoxime group; alkoxy groups having 1 to 4, preferably 1 or 2 carbon atoms, such as a methoxy group, an ethoxy group, a propoxy group, an isopropoxy group, a butoxy group, an isobutoxy group, a sec-butoxy group and a tert-butoxy group; alkoxyalkoxy groups having 2 to 4 carbon atoms, such as a methoxymethoxy group and a methoxyethoxy group; acyloxy groups having 2 to 4 carbon atoms, such as an acetoxy and a propionoxy group; and alkenyloxy groups having 2 to 4 carbon atoms, such as a vinyloxy group, an allyloxy group, a propenoxy group and an isopropenoxy group. X is preferably a methoxy group. The hydrolyzable groups X may be the same group or different groups.

Specific examples of the silane coupling agent of formula (3) as the component (D) include aminosilanes such as γ-aminopropyltrimethoxysilane, γ-aminopropyltriethoxysilane and 3-2-(aminoethylamino)propyltrimethoxysilane [another name: N-2-(aminoethyl)-3-aminopropyltrimethoxysilane]; epoxysilanes such as γ-glycidoxypropyltrimethoxysilane and β-(3,4-epoxycyclohexyl)ethyltrimethoxysilane; (meth)acrylsilanes such as γ-(meth)acryloxypropyltrimethoxysilane and γ-(meth)acryloxypropyltriethoxysilane; mercaptosilanes such as γ-mercaptopropyltrimethoxysilane; and isocyanates such as γ-isocyanatopropyltrimethoxysilane.

The silane coupling agents and/or partial hydrolytic condensates thereof as the component (D) may be used alone or used in combination of two or more thereof.

The compounding amount of the component (D) which may be blended is preferably 0.01 to 10 parts by weight, more preferably 0.1 to 8 parts by weight per 100 parts by weight of the component (A). If the compounding amount of the component (D) is less than 0.01 parts by weight, there is a possibility that a cured product does not exhibit sufficient adhesive performance, and if the compounding amount of the component (D) is more than 10 parts by weight, there is a possibility that rubber strength after curing decreases, or curability is deteriorated.

### [Component (E): inorganic filling agent]

In the room temperature curable organopolysiloxane composition of the present invention, an inorganic filling agent as a component (E) can be blended as an optional component if necessary. The inorganic filling agent as the component (E) is a reinforcing or non-reinforcing filling agent for imparting rubber physical properties to the room temperature curable organopolysiloxane composition of the present invention. Examples of the inorganic filling agent as the component (E) include silica-based filling agents such as dry silica such as pyrogenic silica, fused silica, crushed silica and fumed silica, wet silica such as precipitated silica and sol-gel process silica and crystalline silica (fine powder quartz), diatomaceous earth, carbon black, talc and bentonite which are surface-hydrophobized or untreated, calcium carbonate, zinc carbonate and magnesium carbonate, and calcium oxide, zinc oxide, magnesium oxide, aluminum oxide and aluminum hydroxide, and among them, calcium carbonate, fumed silica, precipitated silica, carbon black and aluminum oxide are preferable, and surface-hydrophobized calcium carbonate, fumed silica, precipitated silica, carbon black and aluminum oxide as inorganic filling agents are more preferable. In this case, the amount of moisture in these inorganic filling agents is preferably small.

The type, amount and surface-treating method and the like of the surface treatment agent (hydrophobizing agent) are not particularly limited, and typically, organosilicon compounds such as chlorosilane, alkoxysilane and organosilazane, and treatment agents such as fatty acid, paraffin, silane coupling agents and titanium coupling agents can be applied.

The inorganic filling agents as the components (E) may be used alone or used in combination of two or more thereof.

The compounding amount of the component (E) which may be blended is preferably 1 to 500 parts by weight, more preferably 3 to 300 parts by weight, still more preferably 5 to 200 parts by weight, particularly preferably 8 to 150 parts by weight per 100 parts by weight of the component (A). If the compounding amount of the component (E) is less than 1 part by weight, there may be a problem of being unsuitable for a use purpose because sufficient rubber strength cannot be obtained, and if the compounding amount of the component (E) is more than 500 parts by weight, there is a possibility that the discharge property from a cartridge is deteriorated, storage stability is deteriorated, and mechanical properties in rubber physical properties obtained are deteriorated.

### [Other components]

In addition, in the room temperature curable organopolysiloxane composition of the present invention, generally known additives may be used in addition to the above-described components as long as the purpose of the present invention is not impaired. Examples of the additive include polyether as a thixotropy improver, silicone oil (non-functional organopolysiloxane) and isoparaffin as a plasticizer. If necessary, colorants such as pigments, dyes and fluorescent brighteners, bioactive additives such as antifungal agents, antibacterial agents and marine organism repellents, surface modifiers such as phenyl silicone oil, fluorosilicone oil, and an organic liquid incompatible with silicone as bleed oil, and solvents such as solvent volatile oil and low-boiling-point isoparaffin can also be added.

The room temperature curable organopolysiloxane composition of the present invention can be obtained by uniformly mixing the above-described components, and further, predetermined amounts of the above-described various additives in a dry atmosphere. The room temperature curable organopolysiloxane composition of the present invention is cured by leaving the composition to stand at room temperature, and as the molding method, curing conditions and the like for the composition, a known method and known conditions appropriate to the type of the composition can be adopted.

The room temperature curable organopolysiloxane composition of the present invention, particularly a one-pack type composition, is stored in the absence of moisture, i.e. in a sealed container which cut off humidity, and easily cured at room temperature (23°C ± 15°C) by exposing to moisture in air when using.

The room temperature curable organopolysiloxane composition of the present invention is friendly to the human body and the environment as the compound generated from a base polymer and a crosslinking agent through a hydrolysis reaction during curing is a cyclic ketone compound having high safety, such as cyclopentanone. Further, cyclopentanone has high safety as it has a burning point of 35°C, which is higher than that of a dealcoholization-type compound that releases an alcohol compound such as methanol during curing of the composition. The room temperature curable organopolysiloxane composition of the present invention exhibits good curability with the use of various existing catalysts, and a cured product thereof (silicone rubber) is excellent in adhesive property. A composition having further reduced environmental hazardousness can be provided by using a catalyst other than tin.

Therefore, the room temperature curable organopolysiloxane composition of the present invention is useful as an adhesive agent, a sealing agent, a potting agent, a coating agent or the like. The method for using the room temperature curable organopolysiloxane composition of the present invention as an adhesive agent, a sealing agent, a potting agent or a coating agent may follow a heretofore known method.

Examples of the relevant article include automobile parts, automobile oil seals, electrical or electronic parts, building structures, and civil engineering structures.

### EXAMPLES

Synthesis Example, Examples and Comparative Examples are given below to illustrate the present invention in more detail, although the present invention is not limited by these Examples. The viscosity is a value measured at 23°C with a rotational viscometer in accordance with the method specified in JIS Z 8803.

### [Synthesis Example 1] Synthesis of hydrolyzable organosilane compound 1

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine, 5 g (0.05 mol) of copper (I) chloride and 1,500 ml of hexane, and 332 g (2.47 mol) of trichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 180°C and 300 Pa to obtain a hydrolyzable organosilane compound 1 (yield 339 g, yield coefficient 58%). This reaction formula is represented by, for example, the following formula [3].

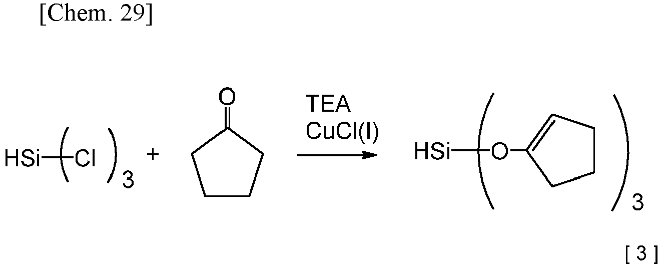

### [Synthesis Example 2] Synthesis of organopolysiloxane compound 1

A 1,000 mL four-neck separable flask equipped with a mechanical stirrer, a thermometer, a reflux tube and a dropping funnel was charged with 500 g of a linear dimethylpolysiloxane (polymerization degree: about 750) which has a viscosity of 28,000 mPa·s and in which each of both ends of the molecular chain is blocked with a vinyl group bonded to a silicon atom, and 2 g of a 0.5 mass% toluene solution as a Karstedt catalyst (platinum-olefin compound complex), and the mixture was heated to 80°C. Next, 25 g of a hydrolyzable organosilane compound 1 was put in a dropping funnel, and added dropwise over 1 hour. After the dropwise addition, the mixture was reacted at 80°C for 6 hours, and then distilled off under reduced pressure at 180°C and 300 Pa for 5 hours to remove toluene and an excess hydrolyzable organosilane compound 1, thereby obtaining an organopolysiloxane compound 1 (yield 498 g, yield coefficient 95%). This reaction formula is represented by, for example, the following formula [4].

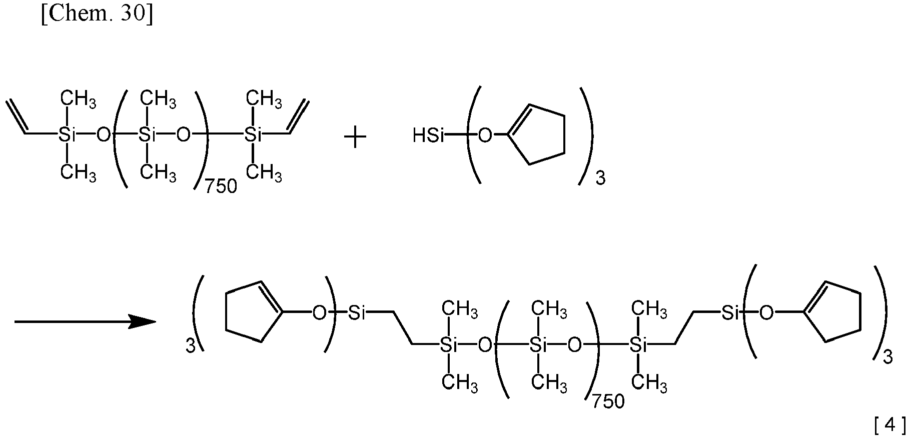

### [Synthesis Example 3] Synthesis of organopolysiloxane compound 2

A 1,000 mL four-neck separable flask equipped with a mechanical stirrer, a thermometer, a reflux tube and a dropping funnel was charged with 500 g of a linear dimethylpolysiloxane (polymerization degree: about 890) which has a viscosity of 31,000 mPa·s and in which each of both ends of the molecular chain and a part of the branched side chain is blocked with a vinyl group bonded to a silicon atom, and 2 g of a 0.5 mass% toluene solution as a Karstedt catalyst (platinum-olefin compound complex), and the mixture was heated to 80°C. Next, 30 g of a hydrolyzable organosilane compound 1 was put in a dropping funnel, and added dropwise over 1 hour. After the dropwise addition, the mixture was reacted at 80°C for 6 hours, and then distilled off under reduced pressure at 180°C and 300 Pa for 5 hours to remove toluene and an excess hydrolyzable organosilane compound 1, thereby obtaining an organopolysiloxane compound 2 (yield 495 g, yield coefficient 93%). This reaction formula is represented by, for example, the following formula [5].

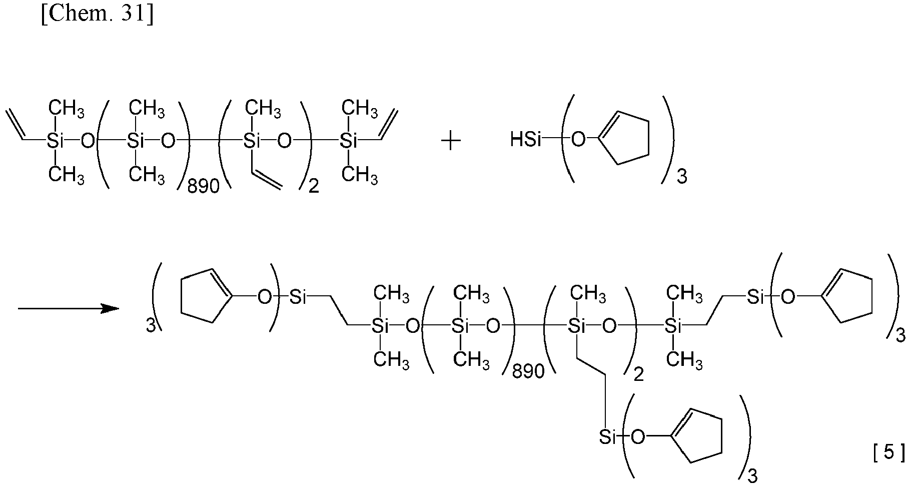

### [Synthesis Example 4] Synthesis of hydrolyzable organosilane compound 2

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine, 5 g (0.05 mol) of copper (I) chloride and 1,500 ml of hexane, and 400 g (2.47 mol) of vinyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 180°C and 300 Pa to obtain a hydrolyzable organosilane compound 2 (yield 532 g, yield coefficient 69%). This reaction formula is represented by, for example, the following formula [6].

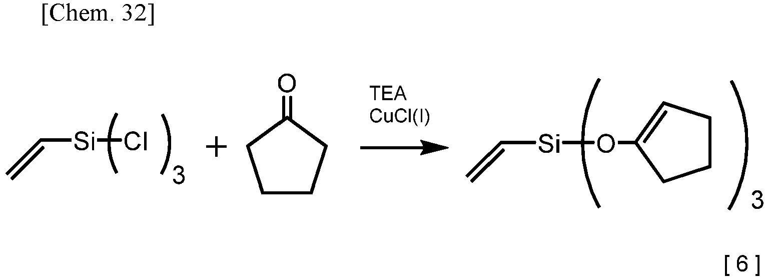

### [Comparative Synthesis Example 1] Synthesis of organopolysiloxane compound 3

A 1,000 mL four-neck separable flask equipped with a mechanical stirrer, a thermometer, a reflux tube and a dropping funnel was charged with 500 g of a linear dimethylpolysiloxane (polymerization degree: about 620) which has a viscosity of 20,000 mPa·s and in which the molecular chain is blocked with a silanol group, and 5 g of triethylamine, and the mixture was heated to 80°C. Next, 40 g of a hydrolyzable organosilane compound 2 was put in a dropping funnel, and added dropwise over 1 hour. After the dropwise addition, the mixture was reacted at 100°C for 6 hours, and then distilled off under reduced pressure at 180°C and 300 Pa for 5 hours to remove triethylamine and an excess hydrolyzable organosilane compound 2, thereby obtaining an organopolysiloxane compound 3 (yield 492 g, yield coefficient 91%). This reaction formula is represented by, for example, the following formula [7].

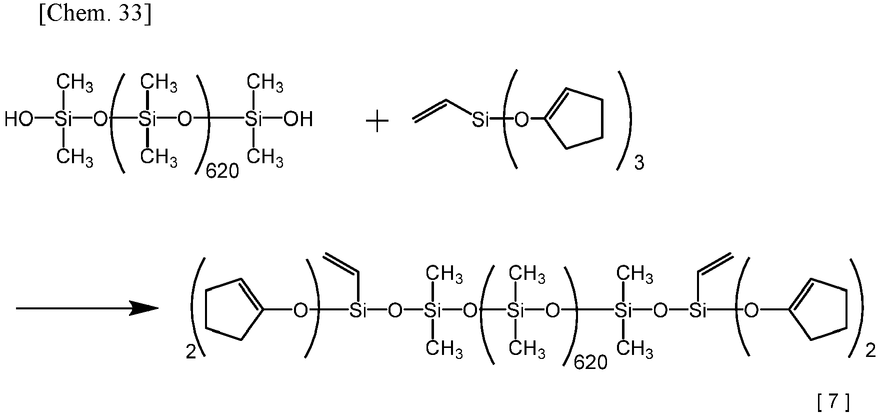

### [Example 1]

To (A-1) 100 parts by weight of the organopolysiloxane compound 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-1) 0.1 parts by weight of dioctyltin dilaurate were added, and the mixture was thoroughly mixed under reduced pressure to obtain a composition 1.

### [Example 2]

To (A-1) 100 parts by weight of the organopolysiloxane compound 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-2) 4 parts by weight of titaniumdiisopropoxybis(ethylacetoacetate) (product name; ORGATIX TC750, manufactured by Matsumoto Fine Chemical Co., Ltd.) were added, and the mixture was thoroughly mixed under reduced pressure to obtain a composition 2.

### [Example 3]

To (A-1) 100 parts by weight of the organopolysiloxane compound 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 3.

### [Example 4]

To (A-2) 100 parts by weight of the organopolysiloxane compound 2, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-1) 0.1 parts by weight of dioctyltin dilaurate were added, and the mixture was thoroughly mixed under reduced pressure to obtain a composition 4.

### [Example 5]

To (A-2) 100 parts by weight of the organopolysiloxane compound 2, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-2) 4 parts by weight of titaniumdiisopropoxybis(ethylacetoacetate) (product name; ORGATIX TC750, manufactured by Matsumoto Fine Chemical Co., Ltd.) were added, and the mixture was thoroughly mixed under reduced pressure to obtain a composition 5.

### [Example 6]

To (A-2) 100 parts by weight of the organopolysiloxane compound 2, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 6.

### [Comparative Example 1]

To (A') 100 parts by weight of a linear dimethylpolysiloxane (polymerization degree: about 620) which has a viscosity of 20,000 mPa·s at 23°C and in which both ends of the molecular chain are blocked with silanol groups (hydroxyl group bonded to a silicon atom), (E) 8 parts by weight of fumed silica whose surface is treated with dimethyldichlorosilane (product name: MU-215, manufactured by Shin-Etsu Chemical Co., Ltd.) were added, the mixture was sufficiently mixed, (B') 10 parts by weight of methyltrismethylethylketoximesilane was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-1) 0.1 parts by weight of dioctyltin dilaurate were added, and the mixture was thoroughly mixed under reduced pressure to obtain a composition 7.

### [Comparative Example 2]

To (A") 100 parts by weight of a linear dimethylpolysiloxane (polymerization degree: about 620) which has a viscosity of 20,000 mPa·s at 23°C and in which both ends of the molecular chain are blocked with methyldimethoxy groups, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B") 10 parts by weight of methyltrimethoxysilane was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-2) 4 parts by weight of titaniumdiisopropoxybis(ethylacetoacetate) (product name; ORGATIX TC750, manufactured by Matsumoto Fine Chemical Co., Ltd.) were added, and the mixture was thoroughly mixed under reduced pressure to obtain a composition 8.

### [Comparative Example 3]

To (A') 100 parts by weight of a linear dimethylpolysiloxane (polymerization degree: about 620) which has a viscosity of 20,000 mPa·s at 23°C and in which both ends of the molecular chain are blocked with silanol groups (hydroxyl group bonded to a silicon atom), (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 9.

### [Comparative Example 4]

To (A‴) 100 parts by weight of the organopolysiloxane compound 3, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B) 8 parts by weight of the hydrolyzable organosilane compound 2 was then added, and the mixture was sufficiently mixed. Finally, (D) 1 part by weight of γ-aminopropyltrimethoxysilane (product name; KBM-903, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 10.

### [Test method]

Evaluation was performed as follows for the compositions (room temperature curable organopolysiloxane compositions) prepared in Examples 1 to 6 and Comparative Examples 1 to 4. Tables 1 and 2 show the following evaluation results together with the compounding amounts in Examples 1 to 6 and Comparative Examples 1 to 4.

### (Initial evaluation)

As initial evaluation, the following tack free time, curing rate, rubber physical properties and adhesive property were evaluated using the compositions immediately after the preparation.

### Tack-free time

Using each of the compositions prepared in Examples and Comparative Examples, the tack-free time (skin-over time) was measured in accordance with the method specified in JIS A 5758.

### Curing rate

In the test method for the curing rate, each of the compositions prepared in Examples and Comparative Examples was filled into a glass petri dish having an inner diameter of 10 mm, and left standing at 23°C and 50% RH for 1 day (24 hours), and a probe was then inserted to measure the thickness (depth) of curing from a portion that was in contact with air.

### Rubber physical properties

Each of the compositions prepared in Examples and Comparative Examples was poured into a 2 mm mold and aged at 23°C and 50% RH for 7 days to obtain a rubber sheet having a thickness of 2 mm. Rubber physical properties (type A durometer hardness, tensile strength, elongation at break) were measured in accordance with JIS K 6249.

### Adhesive property

Each of the compositions prepared in Examples and Comparative Examples was cured by aging the composition between two aluminum plates having a width of 25 mm and a length of 100 mm at 23°C and 50% RH for 7 days, so that a silicone rubber cured product layer bonded to each of the upper and lower aluminum plates by an area of 2.5 cm² and a thickness of 1 mm was formed to produce a shear adhesion test specimen. Using each of the test specimens, the shear adhesive strength to aluminum and the cohesive fracture ratio were measured in accordance with the method specified in JIS K 6249.

### (Evaluation of resistance to moist heat)

For examining resistance to moist heat, the cured silicone rubber sheet and shear adhesion test specimen obtained were exposed to an environment at 85°C and 85% RH, degraded for 1,000 hours, and then subjected to the same test as in the initial stage of production (initial evaluation) (rubber physical properties and adhesive property) to conduct a test for examination of resistance to moist heat.

### (Evaluation of LLC resistance)

For examining LLC resistance, the resulting cured silicone rubber sheet and shear adhesion test specimen immersed in a solution of TOYOTA Super Long Life Coolant and tap water at 50 : 50 on a mass% basis, exposed to an environment at 120°C, degraded for 250 hours, and then subjected to the same test as in the initial stage of production (initial evaluation) (rubber physical properties and adhesive property) to conduct a test for examination of LLC resistance.

**[Table 1]**

| Compounding amount (parts by weight) | | | Example | | | | | |
|---|---|---|---|---|---|---|---|---|
| | | | 1 | 2 | 3 | 4 | 5 | 6 |
| A-1 | Organopolysiloxane compound 1 | | 100 | 100 | 100 | | | |
| A-2 | Organopolysiloxane compound 2 | | | | | 100 | 100 | 100 |
| A' | Dimethylpolysiloxane blocked with silanol groups | | | | | | | |
| A" | Dimethylpolysiloxane blocked with methyldimethoxy groups | | | | | | | |
| A‴ | Organopolysiloxane compound 3 | | | | | | | |
| B | Hydrolyzable organosilane compound 2 | | 8 | 8 | 8 | 8 | 8 | 8 |
| B' | Methyltrimethylethylketoximesilane | | | | | | | |
| B" | Methyltrimethoxysilane | | | | | | | |
| C-1 | Dioctyltin dilaurate | | 0.1 | | | 0.1 | | |
| C-2 | Titanium diisopropoxybis(ethyl acetoacetate) | | | 4 | | | 4 | |
| C-3 | γ-Tetramethylguanidylpropyltrimethoxysilane | | | | 0.6 | | | 0.6 |
| D | γ-Aminopropyltrimethoxysilane | | 1 | 1 | 1 | 1 | 1 | 1 |
| E | Fumed silica | | 10 | 10 | 10 | 10 | 10 | 10 |

| Evaluation result | | | | | | | | |
|---|---|---|---|---|---|---|---|---|
| Tack-free time (min) | | Initial | 4 | 8 | 3 | 3 | 7 | 3 |
| Curing rate (mm/24 h) | | Initial | 2.7 | 2.1 | 2.8 | 2.6 | 2.0 | 2.8 |
| Hardness (type A durometer) | | Initial | 28 | 22 | 29 | 31 | 26 | 32 |
| | | Resistance to moist heat | 24 | 19 | 26 | 28 | 24 | 30 |
| | | LLC resistance | 18 | 17 | 24 | 26 | 22 | 28 |
| Tensile strength (MPa) | | Initial | 2.5 | 2.4 | 2.6 | 2.6 | 2.5 | 2.5 |
| | | Resistance to moist heat | 2.5 | 2.3 | 2.5 | 2.4 | 2.4 | 2.6 |
| | | LLC resistance | 2.2 | 2.3 | 2.4 | 2.1 | 2.2 | 2.4 |
| Elongation at break (%) | | Initial | 460 | 540 | 510 | 420 | 450 | 410 |
| | | Resistance to moist heat | 480 | 360 | 660 | 440 | 430 | 400 |
| | | LLC resistance | 490 | 480 | 360 | 440 | 450 | 410 |
| Shear adhesive strength (MPa) | | Initial | 1.8 | 1.6 | 1.6 | 1.7 | 1.8 | 1.7 |
| | | Resistance to moist heat | 1.8 | 1.7 | 1.6 | 1.7 | 1.8 | 1.6 |
| | | LLC resistance | 1.4 | 1.5 | 1.6 | 1.6 | 1.6 | 1.7 |
| Cohesive fracture ratio (%) | | Initial | 100 | 100 | 100 | 100 | 100 | 100 |
| | | Resistance to moist heat | 100 | 100 | 100 | 100 | 100 | 100 |
| | | LLC resistance | 100 | 100 | 100 | 100 | 100 | 100 |
| Compound desorbed during curing | | | Cyclopentanone | | | | | |
| Health harmfulness or environmental harmfulness of desorbed compound | | | None | | | | | |
| Burning point of desorbed compound (°C) | | | 35 | | | | | |
| Boiling point of desorbed compound (°C) | | | 130 | | | | | |

**[Table 2]**

| Compounding amount (parts by weight) | | | Comparative Example | | | |
|---|---|---|---|---|---|---|
| | | | 1 | 2 | 3 | 4 |
| A-1 | Organopolysiloxane compound 1 | | | | | |
| A-2 | Organopolysiloxane compound 2 | | | | | |
| A' | Dimethylpolysiloxane blocked with silanol groups | | 100 | | 100 | |
| A" | Dimethylpolysiloxane blocked with methyldimethoxy groups | | | 100 | | |
| A‴ | Organopolysiloxane compound 3 | | | | | 100 |
| B | Hydrolyzable organosilane compound 2 | | | | 8 | 8 |
| B' | Methyltrimethylethylketoximesilane | | 8 | | | |
| B" | Methyltrimethoxysilane | | | 10 | | |
| C-1 | Dioctyltin dilaurate | | 0.1 | | | |
| C-2 | Titanium diisopropoxybis(ethyl acetoacetate) | | | 4 | | |
| C-3 | γ-Tetramethylguanidylpropyltrimethoxysilane | | | | 0.6 | 0.6 |
| D | γ-Aminopropyltrimethoxysilane | | 1 | 1 | 1 | 1 |
| E | Fumed silica | | 10 | 10 | 10 | 10 |

| Evaluation result | | | | | | |
|---|---|---|---|---|---|---|
| Tack-free time (min) | | Initial | 8 | 15 | 3 | 4 |
| Curing rate (mm/24 h) | | Initial | 2.4 | 1.8 | 2.8 | 2.7 |
| Hardness (type A durometer) | | Initial | 26 | 22 | 28 | 29 |
| | | Resistance to moist heat | 12 | 12 | 18 | 19 |
| | | LLC resistance | 2 | 8 | 11 | 11 |
| Tensile strength (MPa) | | Initial | 2.4 | 2.2 | 2.6 | 2.5 |
| | | Resistance to moist heat | 1.4 | 1.6 | 2.1 | 2.2 |
| | | LLC resistance | 0.1 | 0.8 | 1.2 | 1.2 |
| Elongation at break (%) | | Initial | 510 | 460 | 480 | 460 |
| | | Resistance to moist heat | 820 | 480 | 620 | 590 |
| | | LLC resistance | 200 | 580 | 740 | 660 |
| Shear adhesive strength (MPa) | | Initial | 1.8 | 1.6 | 1.8 | 1.9 |
| | | Resistance to moist heat | 0.8 | 1.1 | 1.6 | 1.5 |
| | | LLC resistance | 0.1 | 0.4 | 0.7 | 0.9 |
| Cohesive fracture ratio (%) | | Initial | 100 | 100 | 100 | 100 |
| | | Resistance to moist heat | 30 | 50 | 80 | 90 |
| | | LLC resistance | 0 | 0 | 40 | 40 |
| Compound desorbed during curing | | | 2-Butanone oxime | Methanol | Cyclopentanone | |
| Health harmfulness or environmental harmfulness of desorbed compound | | | Possibly carcinogenic, harmful to aquatic organisms | Deleterious substance damage to organ | None | |
| Burning point of desorbed compound (°C) | | | 58 | 11 | 35 | |
| Boiling point of desorbed compound (°C) | | | 153 | 65 | 130 | |

From the above results, it has been shown that regardless of whether a tin catalyst, a titanium catalyst or an organic strong base catalyst is used, the room temperature curable organopolysiloxane compositions of the present invention (Examples 1 to 6) have good curability (tack-free time and curing rate), rubber physical properties and adhesive property in the initial evaluation, and have good characteristics in the evaluation of resistance to moist heat and evaluation of LLC resistance.

On the other hand, it can be seen that the deoximation-type composition of Comparative Example 1 and the dealcoholization-type composition of Comparative Example 2 have severe deterioration in physical properties after evaluation of durability, particularly LLC resistance. The compositions of Comparative Examples 3 and 4 using a de-cyclized ketone-type crosslinking agent were compared with the room temperature curable organopolysiloxane compositions of the present invention, and the results showed that the room temperature curable organopolysiloxane compositions of the present invention were superior in evaluation of resistance to moist heat and evaluation of LLC resistance due to a difference in structure of the base polymer.

The compounds released from the room temperature curable organopolysiloxane compositions of the present invention (Examples 1 to 6) during curing are cyclopentanone, which is a compound having high safety without having been reported to have health harmfulness to the human body such as carcinogenicity and reproduction toxicity, or environmental harmfulness such as toxicity to aquatic organisms. On the other hand, the compounds released from the compositions of Comparative Examples 1 and 2 during curing are all indicated as having health harmfulness in SDS (safety data sheet) or the like. The compounds include 2-butanone oxime which may be carcinogenic and has toxicity to aquatic organisms, methanol which is designated as a deleterious substance and has strong toxicity to the human body. In addition, it can be seen that the room temperature curable organopolysiloxane composition of the present invention is further excellent from the viewpoint of the health of the human body and environmental protection because methanol has a lower burning point and boiling point as compared to cyclopentanone.

From the above results, it has been found that the room temperature curable organopolysiloxane composition of the present invention desorbs a compound having higher safety during curing, and has good curability regardless of which catalyst is used, a cured product thereof has good physical properties, adhesive property and durability (resistance to moist heat and LLC resistance), and the composition can be suitably used in various applications (e.g. adhesive agents, sealing agents, potting agents and coating agents).

## Claims

1. An organopolysiloxane compound of the following general formula (1): 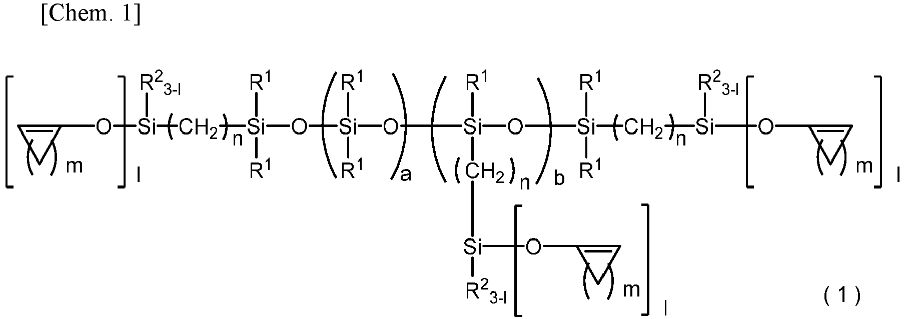 wherein each of R¹ and R² is an unsubstituted or substituted monovalent hydrocarbon group having 1 to 10 carbon atoms, and R¹ and R² may be the same or different groups; and n is independently an integer of 2 to 10, m is independently an integer of 1 to 8, l is 2 or 3 independently for each silicon atom bonded, a is an integer of 50 to 3,000, and b is an integer of 0 to 10.

2. A room temperature curable organopolysiloxane composition comprising:
(A) 100 parts by weight of an organopolysiloxane compound of the following general formula (1): 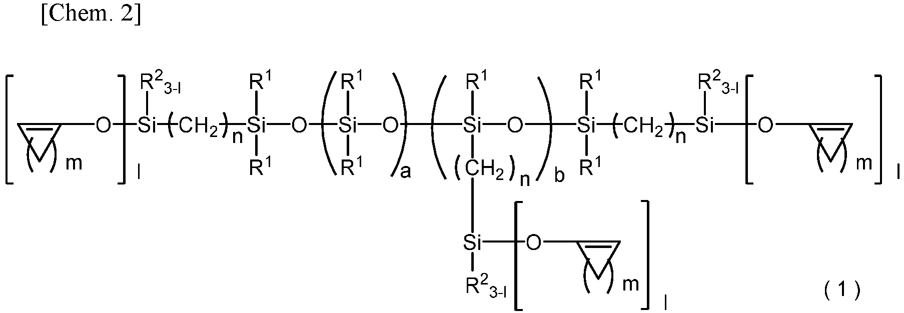 wherein each of R¹ and R² is an unsubstituted or substituted monovalent hydrocarbon group having 1 to 10 carbon atoms, and R¹ and R² may be the same or different groups; and n is independently an integer of 2 to 10, m is independently an integer of 1 to 8, l is 2 or 3 independently for each silicon atom bonded, a is an integer of 50 to 3,000, and b is an integer of 0 to 10;
(B) 1 to 40 parts by weight of a hydrolyzable organosilane compound of the following general formula (2), and/or a partial hydrolytic condensate thereof: 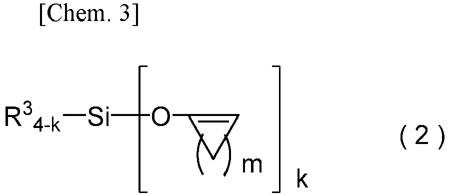 wherein R³ is a monovalent hydrocarbon group having 1 to 10 carbon atoms, m is an integer of 1 to 8, and k is 3 or 4.

3. The room temperature curable organopolysiloxane composition according to claim 2, wherein the organopolysiloxane compound as the component (A) and the hydrolyzable organosilane compound and/or a partial hydrolytic condensate thereof as the component (B) each desorb a cyclic ketone compound by hydrolysis.

4. The room temperature curable organopolysiloxane composition according to claim 3, wherein the cyclic ketone compound is cyclopentanone.

5. The room temperature curable organopolysiloxane composition according to any one of claims 2 to 4, further including (C) 0.01 to 10 parts by weight of a curing catalyst per 100 parts by weight of the component (A).

6. The room temperature curable organopolysiloxane composition according to claim 5, wherein the (C) curing catalyst contains at least one of a tin catalyst, a titanium catalyst, an organic strong base catalyst, and an organobismuth catalyst.

7. The room temperature curable organopolysiloxane composition according to any one of claims 2 to 6, which is free of a tin catalyst.

8. The room temperature curable organopolysiloxane composition according to any one of claims 2 to 7, further comprising (D) 0.01 to 10 parts by weight of a silane coupling agent of the following general formula (3) and/or a partial hydrolytic condensate thereof per 100 parts by weight of the component (A):
R⁴R⁵_{c}SiX_{3-c} (3)
wherein R⁴ is a monovalent hydrocarbon group having 1 to 20 carbon atoms and having at least one functional group containing one or more heteroatoms selected from a nitrogen atom, a sulfur atom and an oxygen atom, R⁵ is independently an unsubstituted or substituted monovalent hydrocarbon group having 1 to 10 carbon atoms, X is independently a hydrolyzable group, and c is 0, 1 or 2.

9. The room temperature curable organopolysiloxane composition according to any one of claims 2 to 8, further comprising (E) 1 to 500 parts by weight of an inorganic filling agent per 100 parts by weight of the component (A).

10. The room temperature curable organopolysiloxane composition according to claim 9, wherein the component (E) is one or more inorganic filling agents selected from calcium carbonate, fumed silica, precipitated silica, carbon black and aluminum oxide.

11. An automobile part comprising a cured product of the room temperature curable organopolysiloxane composition according to any one of claims 2 to 10.

12. An automobile oil seal comprising a cured product of the room temperature curable organopolysiloxane composition according to any one of claims 2 to 10.

13. An electrical or electronic part comprising a cured product of the room temperature curable organopolysiloxane composition according to any one of claims 2 to 10.

14. A building structure comprising a cured product of the room temperature curable organopolysiloxane composition according to any one of claims 2 to 10.

15. A civil engineering structure comprising a cured product of the room temperature curable organopolysiloxane composition according to any one of claims 2 to 10.

16. An adhesive agent comprising the room temperature curable organopolysiloxane composition according to any one of claims 2 to 10.

17. A sealing agent comprising the room temperature curable organopolysiloxane composition according to any one of claims 2 to 10.

18. A potting agent comprising the room temperature curable organopolysiloxane composition according to any one of claims 2 to 10.

19. A coating agent comprising the room temperature curable organopolysiloxane composition according to any one of claims 2 to 10.
